# EUROPEAN PATENT APPLICATION

(11) **EP 3 965 415 A1**
(43) Date of publication of application: **09.03.2022**
(21) Application number: 20818212.1
(22) Date of filing: 21.05.2020
(51) Int. Cl.: H04N 7/18, G08B 13/196, G08B 25/00, G08B 25/04

(54) **INFORMATION PROCESSING DEVICE, METHOD, AND PROGRAM**

(30) Priority: 04.06.2019 JP 2019104237
(71) Applicant: Sony Group Corporation, Tokyo 108-0075 (JP)
(72) Inventor: HIRAI, Michiro, Tokyo 108-0075 (JP); NISHIMURA, Hiroaki, Tokyo 108-0075 (JP)
(74) Representative: D Young & Co LLP
(86) International application number: PCT/JP2020/020062
(87) International publication number: WO 2020/246251

(57) **Abstract**

The present disclosure relates to an information processing device, an information processing method, and a program capable of providing more useful support for an activity of a target moving body.

A predetermined region at a predetermined relative position with respect to a target moving body, the predetermined region being a region where predetermined information is detectable by a moving object, is set as a region to be monitored on the basis of target-moving-body-related information regarding the target moving body detected by the moving object. For example, a region around the target moving body in a predetermined direction is set as the region to be monitored. The present disclosure is applicable to, for example, an information processing device, an image processing device, a communication device, an electronic device, an information processing method, a program, or the like.

## Description

### TECHNICAL FIELD

The present disclosure relates to an information processing device, an information processing method, and a program, and more particularly relates to an information processing device, an information processing method, and a program capable of providing more useful support for an activity of a target moving body.

### BACKGROUND ART

In recent years, provision of support for patrol has been considered, such as monitoring a surrounding area of a police officer on patrol and notifying the police officer of approach of a suspicious person.

As a monitoring system, for example, there is a designated range monitoring system that monitors intrusion of a person, another vehicle, or the like into a designated range around a vehicle (see, for example, Patent Document 1). In this method, it is possible to freely set a monitoring range in a captured image on the basis of an operation of an operator, a sign, or the like.

Further, there is also a method of determining priority of each of a plurality of image capturing devices on the basis of a position of an identified intensive monitoring target and determining processing regarding a video showing a monitoring area in accordance with the priority determined for the image capturing device that takes the video (see, for example, Patent Document 2). In this method, it is possible to identify a position measured by a companion's terminal carried by a companion as a position of the intensive monitoring target in the monitoring area.

### CITATION LIST

### PATENT DOCUMENT

Patent Document 1: Japanese Patent Application Laid-Open No. 2015-170141
Patent Document 2: Japanese Patent Application Laid-Open No. 2018-170573

### SUMMARY OF THE INVENTION

### PROBLEMS TO BE SOLVED BY THE INVENTION

However, in the methods disclosed in Patent Documents 1 and 2, in a case where a subject of an activity to be supported is a moving body (also referred to as "target moving body"), it is difficult to set a region at a predetermined relative position with respect to the target moving body as a monitoring target.

The present disclosure has been made in view of such a circumstance, and an object thereof is to provide more useful support for an activity of a target moving body.

### SOLUTIONS TO PROBLEMS

An information processing device according to one aspect of the present technology is an information processing device including a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.

An information processing method according to one aspect of the present technology is an information processing method including setting, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.

A program according to one aspect of the present technology is a program for causing a computer to function as a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.

In the information processing device, the information processing method, and the program according to one aspect of the present technology, a predetermined region at a predetermined relative position with respect to a target moving body, the predetermined region being a region where predetermined information is detectable by a moving object, is set as a region to be monitored on the basis of target-moving-body-related information regarding the target moving body detected by the moving object.

### BRIEF DESCRIPTION OF DRAWINGS

Fig. 1 illustrates a main configuration example of a patrol support system.
Fig. 2 is a block diagram illustrating a main configuration example of a base station.
Fig. 3 is a block diagram illustrating a main configuration example of a flying object.
Fig. 4 is a block diagram illustrating a main configuration example of a terminal device.
Fig. 5 is a block diagram illustrating a main configuration example of a central control server.
Fig. 6 is a flowchart showing an example of a flow of activity support processing.
Fig. 7 illustrates tracking of a target person.
Fig. 8 is a flowchart showing an example of a flow of tracking processing.
Fig. 9 illustrates setting of a safe zone.
Fig. 10 illustrates an example of setting a safe zone.
Fig. 11 illustrates another example of setting a safe zone.
Fig. 12 is a flowchart showing an example of a flow of safe zone setting processing.
Fig. 13 illustrates detection and handling of an event.
Fig. 14 is a flowchart showing an example of a flow of monitoring processing.
Fig. 15 illustrates a vehicle monitoring mode.
Fig. 16 is a flowchart showing an example of a flow of vehicle monitoring processing.
Fig. 17 illustrates a designated object monitoring mode.
Fig. 18 is a flowchart showing an example of a flow of designated object monitoring processing.
Fig. 19 is a block diagram illustrating a main configuration example of a computer.

### MODE FOR CARRYING OUT THE INVENTION

Hereinafter, modes for carrying out the present disclosure (hereinafter, referred to as "embodiments") will be described. Note that description will be provided in the following order.
1. First Embodiment (Patrol Support System)
2. Vehicle Monitoring Mode
3. Designated Object Monitoring Mode
4. Appendix

### <1. First Embodiment>

### <1-1. Support for Activity>

In recent years, a system that supports an activity performed by a moving body as a subject has been considered. For example, provision of support for patrol has been considered, such as monitoring a surrounding area of a police officer on patrol and notifying the police officer of approach of a suspicious person. As a monitoring system for monitoring a region, for example, there is a designated range monitoring system that monitors intrusion of a person, another vehicle, or the like into a designated range around a vehicle, as disclosed in Patent Document 1. In this method, it is possible to freely set a monitoring range in a captured image on the basis of an operation of an operator, a sign, or the like.

Further, as the monitoring system, for example, there is also a system that determines priority of each of a plurality of image capturing devices on the basis of a position of an identified intensive monitoring target and determines processing regarding a video showing a monitoring area in accordance with the priority determined for the image capturing device that takes the video, as disclosed in Patent Document 2. In this method, it is possible to update the priority of the image capturing device in accordance with the position of the monitoring target.

However, in the methods disclosed in Patent Documents 1 and 2, in a case where the subject of the activity to be supported is a moving body (also referred to as "target moving body"), it is difficult to set a region at a predetermined relative position with respect to the target moving body as a monitoring target. For example, a case where the target is a moving body is not considered in the method disclosed in Patent Document 1. Further, an image of the vehicle is captured only from above in a bird's-eye view, and a field of view (blind spot) of the target is not considered. Further, for example, also in the method disclosed in Patent Document 2, a prioritized image capturing device is only selected according to the position of the companion's terminal, and capturing of an image of a region at a predetermined relative position with respect to the target moving body by using a monitoring staff's terminal or a fixed camera is not guaranteed. Further, the field of view (blind spot) of the target is also not considered.

Therefore, it is difficult to provide useful support for an activity performed by the target moving body as a subject even by using either method disclosed in Patent Document 1 or 2.

Therefore, a predetermined region at a predetermined relative position with respect to a target moving body, the predetermined region being a region where predetermined information is detectable by a moving object, is set as a region to be monitored on the basis of target-moving-body-related information regarding the target moving body detected by the moving object. For example, an information processing device includes a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object. For example, a program causes a computer to function as a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.

As described above, the region to be monitored is set on the basis of the target-moving-body-related information detected by the moving object, and therefore, even in a case where a subject that performs an activity is a moving body (is a target moving body), it is possible to more easily set, as the region to be monitored, a predetermined region at a predetermined relative position with respect to the target moving body. That is, it is possible to more easily obtain information from a region at a desired relative position with respect to the target moving body (monitor the region), and therefore it is possible to support an activity of the target moving body on the basis of the information.

For example, a region serving as a blind spot of the target moving body is a region where obtaining information is difficult for the target moving body. Herein, the blind spot indicates a region invisible to the subject (police officer 113) due to, for example, a limit of a visual field of the subject (police officer 113) or an obstacle or the like that blocks an object. For example, a region behind the police officer 113 (a direction opposite to a direction of a face or a line-of-sight direction of the police officer 113) is generally out of the visual field of the police officer 113, that is, a blind spot. Further, even in the visual field, a field of view is blocked by a wall or the like to cause a blind spot in some cases. Information generated in such a blind spot tends to be difficult for the police officer to grasp.

Therefore, the region to be monitored is set so as to include such a blind spot of the target moving body. This makes it possible to monitor the blind spot of the target moving body. Further, it is possible to notify the target moving body of information that is difficult for the target moving body to obtain by notifying the target moving body of an event occurring in the blind spot of the target moving body (an event regarding an activity performed by the target motion). That is, it is possible to provide more useful support for the activity performed by the target moving body.

<1-2. Patrol Support System>

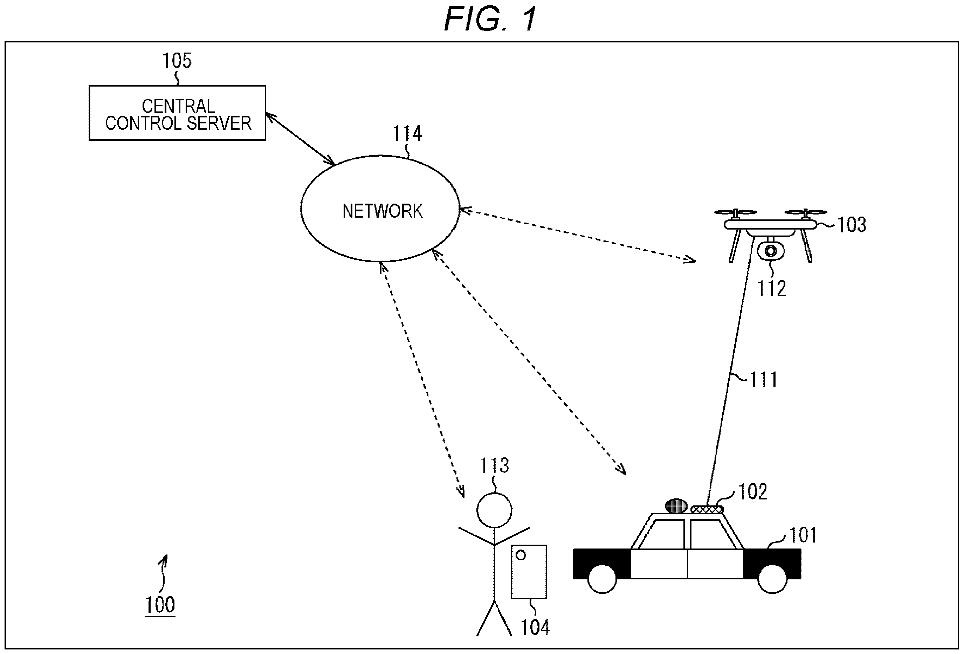

Fig. 1 is a block diagram illustrating an example of a main configuration of a patrol support system that is an aspect of an information processing system to which the present technology is applied. A patrol support system 100 of Fig. 1 is a system that captures an image and supports patrol of a police officer by using the obtained captured image. As illustrated in Fig. 1, the patrol support system 100 includes a patrol car 101, a base station 102, a flying object 103, a terminal device 104, and a central control server 105.

The patrol car 101 is a vehicle in which the police officer 113 rides and is operated, for example, is driven by the police officer 113. The patrol car 101 has not only a function of a normal vehicle but also equipment specific to a police vehicle, such as, for example, a rotating light (also referred to as "red light" or "light bar") and a wireless communication device. Further, the patrol car 101 includes the base station 102.

The base station 102 is a control device that controls the flying object 103 and is a device serving as a site where the flying object 103 takes off and lands. The base station 102 and the flying object 103 are connected to each other by a cable 111 in order to physically limit a flight range of the flying object 103. Further, the base station 102 has a communication function and can communicate with another device such as the patrol car 101, the flying object 103, the terminal device 104, or the central control server 105. A method (standard) of the communication is arbitrary and may be wireless communication, wired communication, or both. For example, the base station 102 and the flying object 103 may perform communication (perform wired communication) via the cable 111 or may perform wireless communication without the cable 111. That is, the cable 111 may or may not be a communication medium. Note that, for example, the base station 102 may wind the cable 111 so as to prevent loosening of the cable 111. In other words, a length of the cable 111 may be variable, and thus a limited flight range of the flying object 103 may be variable.

The flying object 103 is an unmanned aerial vehicle such as a so-called drone. The flying object 103 uses the base station 102 as a take-off and landing site and flies within the limited flight range set by the cable 111. The flying object 103 can autonomously fly or can fly under the control of (by being remotely controlled by) another device such as the base station 102, the terminal device 104, or the central control server 105 (or a device other than those devices).

Further, the flying object 103 includes an arbitrary sensor and can detect arbitrary information by using the sensor. For example, the flying object 103 may include a camera 112 as the sensor or may have an image-capturing function. In that case, the flying object 103 can capture an image by using the camera 112 (image-capturing function unit) while flying. That is, the flying object 103 is an image-capturing range variable unit that can vary an image-capturing range (controls the image-capturing range) of the camera 112. This image capturing can be autonomously performed or can be controlled by another device such as the base station 102.

For example, the flying object 103 captures an image of a surrounding area of the patrol car 101, the police officer 113, or the like on patrol depending on a situation while flying. The captured image can be used for an arbitrary purpose. For example, the captured image may be used to control another arbitrary device such as the patrol car 101, the flying object 103, or the terminal device 104. Further, for example, the captured image may be used to support patrol activity such as recording and guiding.

In other words, the camera 112 includes the flying object 103 and has a flight function. That is, it can be said that the flying object 103 and the camera 112 are a flying object (aerial vehicle) including the image-capturing function unit and the image-capturing range variable unit or an image capturing device including the image-capturing function unit and the image-capturing range variable unit.

The terminal device 104 is an electronic device carried by the police officer 113 who is a user (driver, crew) of the patrol car 101. For example, the terminal device 104 may be a portable terminal device such as a smartphone or tablet device. Further, for example, the terminal device 104 may be a wearable device in the form of a wristwatch, glasses, a ring, shoes, a pocket, a pendant, or the like. The terminal device 104 includes an arbitrary sensor and can detect arbitrary information by using the sensor. For example, the terminal device 104 may have an image-capturing function such as a camera and capture an image of a subject.

For example, the terminal device 104 carried by the police officer 113 on patrol captures an image of a state around the police officer 113. The captured image can be used for an arbitrary purpose. For example, the captured image may be used to control another arbitrary device such as the patrol car 101 or the flying object 103.

Further, for example, the terminal device 104 may detect the use of a weapon or tool by the police officer 113, biological information of the police officer 113 such as a pulse, heart rate, and line-of-sight direction, and the like by using the sensor. The detected information (sensor information) can be used for an arbitrary purpose. For example, the sensor information may be used to control another arbitrary device such as the patrol car 101 or the flying object 103.

The central control server 105 is a server that manages the patrol support system 100. The patrol car 101 to the terminal device 104 described above are devices (local devices) on the terminal side in the patrol support system 100. Meanwhile, the central control server 105 is a device on the server side and, for example, manages and controls the patrol car 101 to the terminal device 104.

The central control server 105 has an arbitrarily configuration and may be, for example, an information processing device provided in a central management facility such as a control center or an information processing device whose configuration is not specified, such as a so-called cloud server.

The central control server 105 is communicably connected to the base station 102 via a network 114, communicates with the base station 102, controls the base station 102, acquires information from the base station 102, and communicates with another device via the base station 102. As a matter of course, the central control server 105 may be communicably connected to the patrol car 101, the flying object 103, and the terminal device 104 via the network 114 so as to communicate with those devices without the base station 102. Note that a method (standard) of the communication is arbitrary and may be wireless communication, wired communication, or both.

The network 114 is, for example, an arbitrary network such as the Internet or a local area network. The network 114 includes one or a plurality of networks including wired communication, wireless communication, or both. The patrol car 101 to the terminal device 104 are connected to the network 114 by, for example, wireless communication. Further, the central control server 105 is connected to the network 114 by wired communication, wireless communication, or both.

Note that, although one patrol car 101 to one central control server 105 are illustrated in Fig. 1, the numbers of devices each included in the patrol support system 100 are arbitrary. Each device may be one or a plurality of devices. Further, the numbers of the respective devices may not be the same.

For example, a plurality of base stations 102 may be provided for one patrol car 101. Further, for example, a plurality of flying objects 103 may be provided for one base station 102. That is, the plurality of flying objects 103 may use the same base station 102 as a take-off and landing site. In other words, the one base station 102 may control the plurality of flying objects 103.

Further, a plurality of terminal devices 104 may be provided for one patrol car 101. For example, a plurality of police officers 113 may ride in the one patrol car 101 on duty, and the plurality of police officers 113 may carry the terminal devices 104, respectively. Further, one police officer 113 may carry a plurality of terminal devices 104.

Further, a plurality of local devices may be provided for one central control server 105. That is, a plurality of patrol cars 101 (in addition, a plurality of base stations 102 and terminal devices 104) may be provided for the one central control server 105. In that case, the central control server 105 communicates with the base stations 102 of the respective patrol cars 101 or other local devices. Further, a plurality of central control servers 105 may be provided in the patrol support system 100. In that case, each central control server 105 may communicate with different local devices, or the plurality of central control servers 105 may communicate with the same local device. Further, a plurality of central control servers 105 may share a plurality of processes or may perform one process in cooperation.

### <1-3. Content of Support>

Next, content of support provided by the patrol support system 100 will be described. The patrol support system 100 can perform arbitrary processing regarding support for patrol carried out by the police officer 113. For example, the patrol support system 100 can collect and record information regarding a surrounding environment, exercise caution (e.g., detect occurrence of abnormality or a suspicious person), notify the police officer 113 of information (e.g., notify the police officer of investigative information or give the police officer warning and guide the police officer when a dangerous situation occurs), and monitor and record behavior of the police officer 113.

### <1-4. Configuration of Device>

### <Base Station>

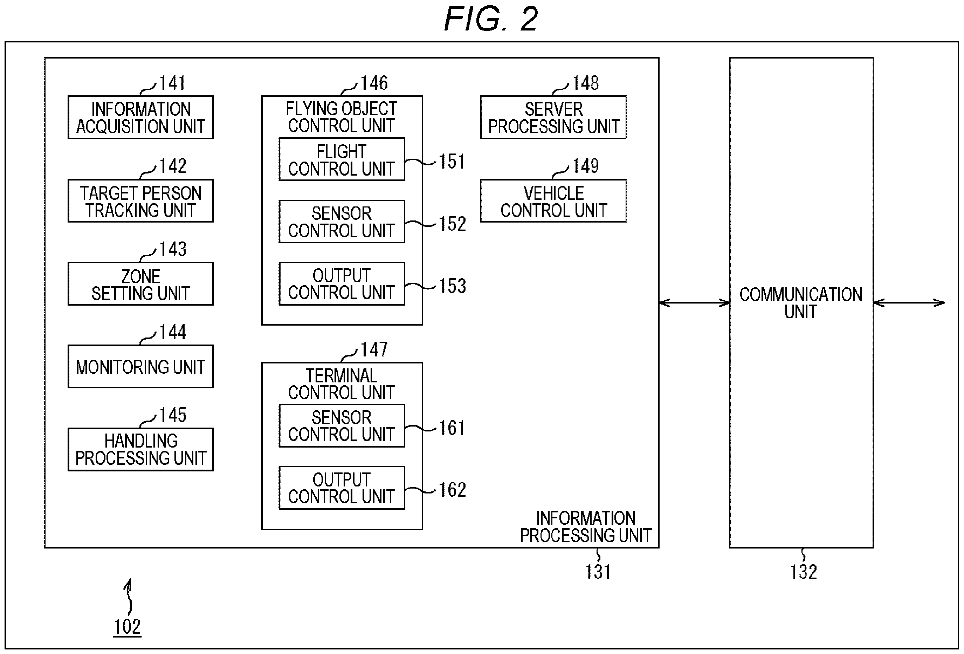

Next, a configuration of each device will be described. Fig. 2 is a block diagram illustrating an example of a main configuration of the base station 102 that is an aspect of an information processing device to which the present technology is applied. As illustrated in Fig. 2, the base station 102 includes an information processing unit 131 and a communication unit 132.

The information processing unit 131 performs various kinds of information processing regarding support for patrol carried out by the police officer 113. For example, the information processing unit 131 can communicate with another device (e.g., the patrol car 101, the flying object 103, the terminal device 104, the central control server 105, or the like) via the communication unit 132 to acquire information from the another device or supply information generated by the information processing unit itself to the another device. Further, the information processing unit 131 can identify a target moving body (a moving body serving as a subject of an activity to be supported) and set a region to be monitored (also referred to as "safe zone"). Furthermore, the information processing unit 131 can detect (occurrence of) a predetermined event in the safe zone. Still further, the information processing unit 131 can perform processing regarding control of another device such as the patrol car 101, the flying object 103, or the terminal device 104. Moreover, the information processing unit 131 can perform processing in cooperation with the central control server 105, such as distribution of a captured image, for example.

The information processing unit 131 has an arbitrary configuration. For example, the information processing unit 131 may include an information acquisition unit 141. The information acquisition unit 141 performs processing regarding acquisition of information. For example, the information acquisition unit 141 can acquire information supplied from another device (e.g., the patrol car 101, the flying object 103, the terminal device 104, the central control server 105, or the like) via the communication unit 132. For example, the information acquisition unit 141 may acquire information (also referred to as "sensor information") detected by the sensor included in the flying object 103. For example, the information acquisition unit 141 may acquire, for example, a captured image captured and generated by the camera 112 from the flying object 103 as the sensor information (also referred to as "flying object detection information"). Further, the information acquisition unit 141 may acquire sensor information (also referred to as "terminal detection information") detected by the sensor included in the terminal device 104. Furthermore, the information acquisition unit 141 may acquire information (e.g., control information or the like) supplied from the central control server 105. Still further, the information acquisition unit 141 may acquire information regarding the vehicle (patrol car 101) (also referred to as "vehicle information") generated in the patrol car 101.

Note that content of the vehicle information is arbitrary as long as the information relates to the vehicle. For example, the vehicle information may include vehicle-position-and-posture information that is information regarding a position and posture of the vehicle. Content of the vehicle-position-and-posture information is arbitrary as long as the information relates to the position and posture of the vehicle.

For example, the vehicle-position-and-posture information may include information indicating a position of the patrol car 101 measured by receiving a signal transmitted from a global positioning system (GPS) satellite or the like. Further, the vehicle-position-and-posture information may include information indicating the position and direction (posture) of the patrol car 101 measured by using an angular velocity sensor (also referred to as "gyroscope" or "gyro sensor"). Furthermore, the vehicle-position-and-posture information may include information indicating the position and direction (posture) of the patrol car 101 derived on the basis of an operation (driving operation) of an accelerator, a brake, a steering, or the like.

Further, for example, the vehicle information may include vehicle operation information that is information regarding an operation on the vehicle (an operation on equipment of the vehicle). Content of the vehicle operation information is arbitrary as long as the information relates to an operation of the vehicle. For example, the vehicle operation information may include information indicating a state of an engine of the patrol car 101 (i.e., whether or not the engine is driven, for example) (or information indicating a state of an ignition key (on, off, accessory power (ACC), or the like). Further, the vehicle operation information may include information indicating an open/closed state of doors of the patrol car 101.

Further, for example, the vehicle information may include vehicle accessory equipment information that is information regarding accessory equipment of the vehicle. Content of the vehicle accessory equipment information is arbitrary as long as the information relates to the accessory equipment of the vehicle. For example, the vehicle accessory equipment information may include information regarding equipment installed in the patrol car 101. Further, the equipment may be accessory equipment specific to a police vehicle. That is, the vehicle accessory equipment information may include information (police equipment information) regarding the accessory equipment specific to a police vehicle.

For example, the vehicle accessory equipment information may include information indicating a state (on, off, or the like) of the rotating light (red light or light bar) of the patrol car 101 (or information indicating an operation status of an operation unit of the rotating light). Further, the vehicle accessory equipment information may include information indicating a usage status (e.g., not used, in use, or recently used) of a siren or loudspeaker of the patrol car 101 (or information indicating an operation status of an operation unit of the siren or loudspeaker). Further, the vehicle accessory equipment information may include information indicating a usage status (e.g., not used, in use, or recently used) of the wireless communication device of the patrol car 101 (or information indicating an operation status of an operation unit of the wireless communication device).

Further, the vehicle accessory equipment information may include information indicating a usage status of equipment detachable from the patrol car 101 (e.g., whether or not the equipment has been taken out from the patrol car 101). For example, a usage status of a weapon (e.g., a gun or nightstick), a tool (e.g., a flashlight or sign), or the like installed at a predetermined position (e.g., a trunk or the like) of the patrol car 101 (e.g., whether or not the weapon, tool, or the like has been removed from the predetermined position) may be detected by a sensor or the like, and a detection result thereof may be included in the vehicle accessory equipment information.

Further, the information processing unit 131 may include a target person tracking unit 142. The target person tracking unit 142 performs processing regarding tracking of the target moving body by the flying object 103. For example, the target person tracking unit 142 can identify the police officer 113 who rides in the patrol car 101 on duty as the target moving body (also referred to as "target person" in this case) on the basis of the information acquired by the information acquisition unit 141. Further, the target person tracking unit 142 may perform processing for causing the flying object 103 to track the police officer 113 identified as the target person (e.g., image processing, generation of a movement instruction to the flying object 103, or the like) on the basis of the information acquired by the information acquisition unit 141.

The information acquired by the information acquisition unit 141 and used in the processing regarding tracking of the target moving body may be any information. For example, the target person tracking unit 142 may perform the above processing on the basis of the flying object detection information or may perform the above processing on the basis of the terminal detection information.

Further, content of the information is arbitrary. For example, the target person tracking unit 142 may perform the above processing on the basis of position information of the terminal device 104. Further, the target person tracking unit 142 may perform the above processing by using identification information of the police officer 113. Furthermore, the target person tracking unit 142 may perform the above processing on the basis of an image of a surrounding area of the police officer 113 including the police officer 113. Still further, the target person tracking unit 142 may perform the above processing on the basis of a plurality of pieces of information among the above information.

Note that, in a case where tracking of the police officer 113 becomes impossible, the target person tracking unit 142 may move the flying object 103 near the patrol car 101 associated with the flying object 103 and set the patrol car 101 as a tracking target. Further, in a case where a protection target is designated, the target person tracking unit 142 may move the flying object 103 near the designated protection target and set the protection target as the tracking target.

Further, the information processing unit 131 may include a zone setting unit 143. The zone setting unit 143 performs processing regarding setting of the safe zone. For example, the zone setting unit 143 can set, as the safe zone (region to be monitored), a predetermined region at a predetermined relative position with respect to the target moving body, the predetermined region being a region where predetermined information is detectable by (the camera 112 of) the flying object 103, on the basis of the target-moving-body-related information regarding the target moving body acquired by the information acquisition unit 141.

For example, the zone setting unit 143 may set a region around the police officer 113 serving as the target moving body in a predetermined direction as the safe zone. For example, the zone setting unit 143 may set the safe zone so as to include a region behind the police officer 113. Further, for example, the zone setting unit 143 may identify a range of a blind spot of the police officer 113 in a region around the police officer 113 and set a region including the identified range as the safe zone. For example, the zone setting unit 143 may set the region behind the police officer 113 as the blind spot of the police officer 113 and set the safe zone so as to include the region behind the police officer 113.

Note that the zone setting unit 143 may set the safe zone on the basis of, for example, the flying object detection information detected by the flying object 103. The sensor information detected by the flying object 103 may be any information. For example, the information may be the target-moving-body-related information regarding the target moving body (police officer 113).

The target-moving-body-related information may be any information as long as the information relates to the target moving body and may include, for example, at least one of an image, sound, temperature distribution, or distance in a surrounding area of the police officer 113 including the police officer 113 serving as the target moving body. That is, the target-moving-body-related information may be information regarding the target moving body himself/herself (e.g., a position, a direction of a face, and the like of the target moving body), information regarding the region around the target moving body, or both thereof. Further, the target-moving-body-related information may also include other information.

Further, the zone setting unit 143 may set the safe zone on the basis of, for example, the flying object detection information (e.g., the target-moving-body-related information) detected by the flying object 103 and the terminal detection information detected by the terminal device 104. The flying object detection information may be any information. For example, the flying object detection information (target-moving-body-related information) may include at least one of an image, sound, temperature distribution, or distance in a surrounding area of the police officer 113 including the police officer 113 serving as the target moving body. Further, the terminal detection information may also be any information. For example, the terminal detection information may include at least one of an image or sound in a field-of-view direction of the police officer 113 serving as the target moving body, an image or voice of the police officer 113, biological information of the police officer 113, or information regarding a position, direction, or posture of the police officer 113.

Note that, in a case where the patrol car 101 is identified as the tracking target by the target person tracking unit 142, the zone setting unit 143 may set a region in a predetermined range including the patrol car 101 as the safe zone. Further, in a case where a predetermined protection target is identified as the tracking target by the target person tracking unit 142, the zone setting unit 143 may set a region in a predetermined range including the protection target as the safe zone.

Further, the information processing unit 131 may include a monitoring unit 144. The monitoring unit 144 performs processing regarding monitoring of the safe zone. For example, the monitoring unit 144 can detect a predetermined event occurring in the safe zone set by the zone setting unit 143 on the basis of the information acquired by the information acquisition unit 141. The monitoring unit 144 detects an arbitrary event. For example, the monitoring unit 144 may detect, as the event, detection of an intruding moving body that has intruded into the safe zone.

Further, the monitoring unit 144 may evaluate the detected event. For example, the monitoring unit 144 may detect, as the event, detection of the intruding moving body that has intruded into the safe zone and evaluate a degree of importance of the detected event on the basis of information regarding the intruding moving body. The information regarding the intruding moving body is arbitrary. For example, the information regarding the intruding moving body may include at least one of a speed at which the intruding moving body approaches the target moving body, a component of the intruding moving body, motion of the intruding moving body, or known evaluation regarding the intruding moving body. The degree of importance of the event may be determined in consideration of, for example, a degree of danger, urgency, or the like.

Further, the information processing unit 131 may include a handling processing unit 145. The handling processing unit 145 performs processing corresponding to the event. For example, the handling processing unit 145 can perform processing according to the event detected by the monitoring unit 144. For example, the handling processing unit 145 may perform processing regarding notification of occurrence of the event to the target moving body (e.g., notification of intrusion of a suspicious person into the safe zone to the police officer 113). For example, the handling processing unit 145 may cause the flying object 103, the terminal device 104, or both to make the notification.

Further, the information processing unit 131 may include a flying object control unit 146. The flying object control unit 146 performs processing regarding control of the flying object 103. For example, the flying object control unit 146 controls the flying object 103 by generating control information for controlling the flying object 103 and supplying the control information to the flying object 103 via the communication unit 132.

For example, the flying object control unit 146 may include a flight control unit 151. The flight control unit 151 controls flight of the flying object 103. For example, the flight control unit 151 controls the flight of the flying object 103 by generating control information (also referred to as "flight control information") regarding the flight (e.g., a position, altitude, posture, and the like) of the flying object 103 and supplying the flight control information to the flying object 103 via the communication unit 132.

Further, the flying object control unit 146 may include a sensor control unit 152. The sensor control unit 152 controls driving of the sensor included in the flying object 103. For example, the sensor control unit 152 controls acquiring of the sensor information by the flying object 103 by generating control information (also referred to as "sensor control information") for controlling driving of the sensor included in the flying object 103 (e.g., capturing of an imaging of a subject by the camera 112) and supplying the sensor control information to the flying object 103 via the communication unit 132.

Further, the flying object control unit 146 may include an output control unit 153. The output control unit 153 controls driving of an output unit (e.g., a monitor, projector, light emitting unit, speaker, or the like) included in the flying object 103. For example, the output control unit 153 controls output of information by the flying object 103 (e.g., notification or the like to the police officer 113) by generating control information (also referred to as "output control information") for controlling driving of the output unit included in the flying object 103 (e.g., display of an image by the monitor, projection of an image by the projector, emission of light by the light emitting unit, output of a sound by the speaker, or the like) and supplying the output control information to the flying object 103 via the communication unit 132.

Further, the information processing unit 131 may include a terminal control unit 147. The terminal control unit 147 performs processing regarding control of the terminal device 104. For example, the terminal control unit 147 controls the terminal device 104 by generating control information for controlling the terminal device 104 and supplying the control information to the terminal device 104 via the communication unit 132.

For example, the terminal control unit 147 may include a sensor control unit 161. The sensor control unit 161 controls driving of the sensor included in the terminal device 104. For example, the sensor control unit 161 controls acquiring of the sensor information by the terminal device 104 by generating control information (also referred to as "sensor control information") for controlling driving of the sensor included in the terminal device 104 (e.g., capturing of an image of a subject by an image sensor) and supplying the sensor control information to the terminal device 104 via the communication unit 132.

Further, the terminal control unit 147 may include an output control unit 162. The output control unit 162 controls driving of an output unit (e.g., a monitor, projector, light emitting unit, speaker, vibrator, or the like) included in the terminal device 104. For example, the output control unit 162 controls output of information by the terminal device 104 (e.g., notification or the like to the police officer 113) by generating control information (also referred to as "output control information") for controlling driving of the output unit included in the terminal device 104

(e.g., display of an image by the monitor, projection of an image by the projector, emission of light by the light emitting unit, output of a sound by the speaker, vibration by the vibrator, or the like) and supplying the output control information to the flying object 103 via the communication unit 132.

Further, the information processing unit 131 may include a server processing unit 148. The server processing unit 148 performs processing in cooperation with the central control server 105. For example, the server processing unit 148 can perform processing on the basis of control information transmitted from the central control server 105 and acquired by the information acquisition unit 141. The processing is arbitrary. For example, the processing may be processing regarding control of the flying object 103 or the terminal device 104.

Further, for example, the server processing unit 148 can also perform processing regarding transmission of an image and sound to the central control server 105. For example, the server processing unit 148 may cause data of a captured image and sound generated by the flying object 103 or the terminal device 104 to be transmitted to the central control server 105 via the communication unit 132. Further, the server processing unit 148 may transmit the image and sound by a streaming method in cooperation with the central control server 105.

Further, the information processing unit 131 may include a vehicle control unit 149. The vehicle control unit 149 performs processing regarding control of the patrol car 101 that is a vehicle. For example, the vehicle control unit 149 controls the patrol car 101 by generating control information for controlling the patrol car 101 and supplying the control information to the patrol car 101 via the communication unit 132. For example, the vehicle control unit 149 can perform the above control to move the patrol car 101 or drive the equipment of the patrol car 101.

The communication unit 132 includes a communication interface and communicates with another device via the communication interface. A method (standard) of the communication is arbitrary and may be wireless communication, wired communication, or both.

For example, the communication unit 132 can communicate with the patrol car 101, the flying object 103, the terminal device 104, the central control server 105, and the like, receive information transmitted therefrom, and supply the information to the information acquisition unit 141. Further, the communication unit 132 can transmit information (e.g., control information and the like) supplied from the flying object control unit 146, the terminal control unit 147, the server processing unit 148, the vehicle control unit 149, and the like to the patrol car 101, the flying object 103, the terminal device 104, the central control server 105, and the like.

Note that each processing unit (the information acquisition unit 141 to the vehicle control unit 149) of the information processing unit 131 can have an arbitrary configuration. For example, each processing unit may be configured by a logic circuit for realizing the processing described above. Alternatively, each processing unit may include, for example, a CPU, a ROM, a RAM, and the like and execute a program by using the CPU, the ROM, the RAM, and the like, thereby realizing the processing described above. As a matter of course, each processing unit may have both configurations, and a part of the processing described above may be realized by a logic circuit and the other parts thereof may be realized by executing a program.

Further, the communication unit 132 can have an arbitrary configuration in addition to the communication interface described above. For example, the communication unit 132 may include a logic circuit for realizing control processing for controlling the communication interface described above. Further, the communication unit 132 may include, for example, a CPU, a ROM, a RAM, and the like and execute a program by using the CPU, the ROM, the RAM, and the like, thereby realizing the control processing. As a matter of course, the communication unit 132 may have both configurations, and a part of the control processing may be realized by a logic circuit and the other parts thereof may be realized by executing a program.

Note that the configuration of each processing unit (the information acquisition unit 141 to the vehicle control unit 149) of the information processing unit 131 may be independent from each other. For example, some processing units may realize the processing by a logic circuit, some other processing units may realize the processing by executing a program, and the other processing units may realize the processing by both a logic circuit and execution of a program.

### <Flying Object>

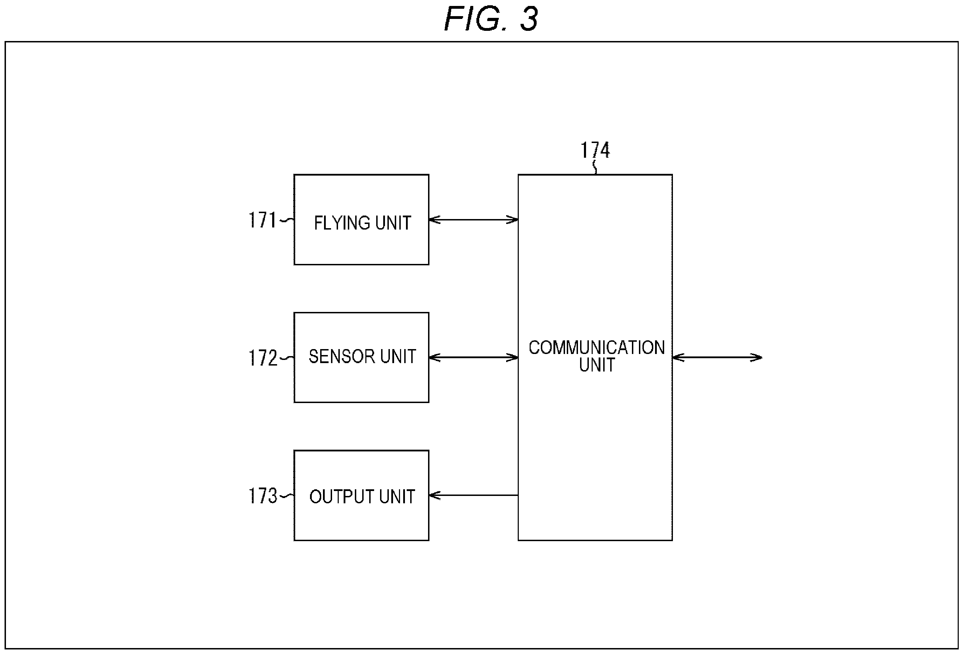

Fig. 3 is a block diagram illustrating an example of a main configuration of the flying object 103 that is an aspect of the image capturing device (or moving object) to which the present technology is applied. As illustrated in Fig. 3, the flying object 103 includes a flying unit 171, a sensor unit 172, an output unit 173, and a communication unit 174.

The flying unit 171 has a configuration regarding the flight of the flying object 103 and performs processing regarding the flight of the flying object 103. The configuration regarding the flight is arbitrary. For example, the configuration regarding the flight may include a propeller and a motor. Further, for example, the configuration regarding the flight may also include a control unit or the like that controls the propeller and the motor.

Further, the flying unit 171 may have a configuration for acquiring information from the configuration regarding the flight. The information acquired from the configuration regarding the flight is arbitrary. For example, the information may include information regarding the flight such as a position, a posture (direction, inclination, and the like), and a speed of the flying object 103 and a rotational speed of the propeller. Further, the information may include information regarding a surrounding area of the flying object 103 such as a temperature and a wind speed.

Further, the configuration for acquiring the information is arbitrary. For example, the configuration may include a configuration for acquiring the information regarding the flight, such as a positioning unit that measures the position of the flying object 103 by using a GPS signal or the like, a gyro sensor that detects the posture and the speed, and a sensor that detects the rotational speed of the propeller. Further, for example, the configuration may include a configuration for acquiring the information regarding the surrounding area of the flying object 103, such as a temperature sensor and a wind speed sensor. Furthermore, the configuration may include a control unit that controls those sensors or the like.

The flying unit 171 can acquire the flight control information supplied via the communication unit 174 (the flight control information transmitted from the base station 102). Further, the flying unit 171 can drive the configuration regarding the flight in accordance with the acquired flight control information to fly the flying object 103. Furthermore, the flying unit 171 can generate the information regarding the flight, the information regarding the surrounding area of the flying object 103, and the like by using the configuration for acquiring the information described above. Still further, the flying unit 171 can transmit the above information to another device (e.g., the base station 102, the terminal device 104, the central control server 105, or the like) via the communication unit 174.

The sensor unit 172 has a configuration regarding detection of information and performs processing regarding detection of information. For example, the sensor unit 172 may include a sensor. The sensor may detect any information. For example, the sensor may be an image sensor, a microphone, a temperature sensor, a humidity sensor, a distance sensor, a brightness sensor, an invisible light sensor such as an infrared light sensor, or the like, or may be other sensors.

Specifications of each sensor are arbitrary. Further, the sensor unit 172 may include a plurality of sensors. Furthermore, the sensor unit 172 may include a plurality of kinds of sensors that detects different kinds of information, such as, for example, the image sensor and the microphone. As a matter of course, the sensor unit 172 may include a plurality of kinds of sensors, each kind of sensor including a plurality of sensors, such as, for example, two image sensors, three temperature sensors, and four microphones. Further, a single sensor may detect a plurality of kinds of information.

Further, the sensor unit 172 may include a control unit that controls the sensor described above. Furthermore, the sensor unit 172 may also include a processing unit that processes the information detected by the sensor described above.

The sensor unit 172 can drive the sensor on the basis of the sensor control information supplied via the communication unit 174 and detect the flying object detection information (e.g., the target-moving-body-related information). For example, the sensor unit 172 can set parameters regarding image capturing (e.g., exposure, a timing, a shutter speed, an image-capturing position, an image-capturing direction, an angle of view, and image processing) on the basis of the sensor control information, capture an image by using the image sensor, and generate a captured image. The flying object detection information may be any information as long as the information is detected by the sensor included in the sensor unit 172. For example, the flying object detection information may be an image, a sound, a temperature distribution, a distance, a combination of two or more thereof, a combination of one or more pieces of the information with other information, or only other information.

Further, the sensor unit 172 can transmit the detected information as the flying object detection information to another device (e.g., the base station 102 or the like) via the communication unit 174. Furthermore, the sensor unit 172 can analyze the detected information by a predetermined method and transmit an analysis result thereof as the flying object detection information to another device via the communication unit 174.

The output unit 173 has a configuration regarding output of information and performs processing regarding output of information. For example, the output unit 173 may include an output device. The output device may output arbitrary information. For example, the output device may be a device that outputs information perceived by a visual sense (also referred to as "visual information"), such as an image and light.

The device that outputs the visual information may be any device. For example, the device may be a display (e.g., a liquid crystal display (LCD) or the like) that displays an image, a projector that projects an image, or a light emitting body that emits light (e.g., a light emitting diode (LED) or the like).

Further, the output device may be a device that outputs information perceived by an auditory sense (also referred to as "auditory information"), such as sound. The device that outputs the auditory information may be any device. For example, the device may be a speaker that outputs a sound. As a matter of course, the output device may be a device that outputs other information.

Further, the output unit 173 may include a plurality of output devices. Furthermore, the output unit 173 may include a plurality of kinds of output devices that outputs different kinds of information, such as, for example, the display and the speaker. As a matter of course, the output unit 173 may include a plurality of kinds of output devices, each kind of output device including a plurality of output devices, such as, for example, two displays, three projectors, and four speakers. Further, a single output device may output a plurality of kinds of information.

Further, the output unit 173 may also include a control unit or the like that controls the output device. Furthermore, the output unit 173 may also include a processing unit that generates information to be output by the output device.

The output unit 173 can drive the output device on the basis of, for example, the output control information supplied via the communication unit 174 and output information to be supplied via the communication unit 174.

The communication unit 174 includes a communication interface and communicates with another device via the communication interface. A method (standard) of the communication is arbitrary and may be wireless communication, wired communication, or both.

The communication unit 174 can communicate with another device (e.g., the base station 102), receive information transmitted from the another device, and supply the control information to the flying unit 171, the sensor unit 172, or the output unit 173. Further, the communication unit 174 can transmit information supplied from the flying unit 171, the sensor unit 172, or the output unit 173 to another device (e.g., the base station 102).

Note that processing units of the flying unit 171 to the communication unit 174 may each include a predetermined logic circuit and realize the processing described above by using the logic circuit. Alternatively, each processing unit may include, for example, a CPU, a ROM, a RAM, and the like and execute a program by using the CPU, the ROM, the RAM, and the like, thereby realizing the processing described above. As a matter of course, each processing unit may have both configurations, and a part of the processing described above may be realized by a logic circuit and the other parts thereof may be realized by executing a program.

Note that the configuration of each processing unit may be independent from each other. For example, some processing units may realize the processing by a logic circuit, some other processing units may realize the processing by executing a program, and the other processing units may realize the processing by both a logic circuit and execution of a program.

### <Terminal Device>

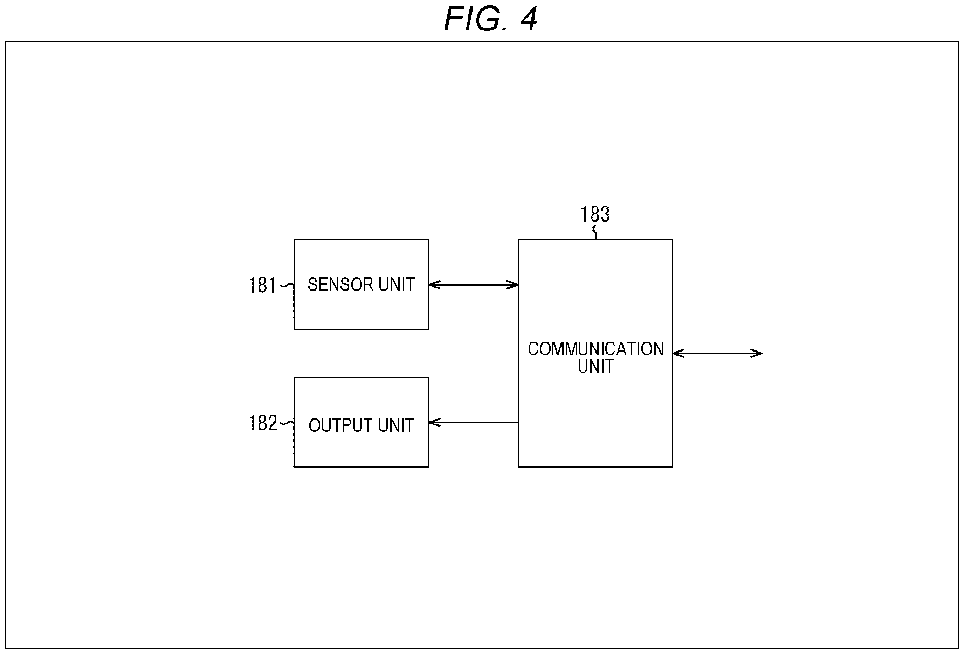

Fig. 4 is a block diagram illustrating an example of a main configuration of the terminal device 104 that is an aspect of the information processing device to which the present technology is applied. As illustrated in Fig. 4, the terminal device 104 includes a sensor unit 181, an output unit 182, and a communication unit 183.

The sensor unit 181 has a configuration regarding detection of information and performs processing regarding detection of information. For example, the sensor unit 181 may include a sensor. The sensor may detect any information. For example, the sensor may be a sensor that detects a state of a surrounding area of the terminal device 104, such as an image sensor or microphone. Further, the sensor may be a biological sensor that detects biological information, such as a heart rate, pulse, and line-of-sight direction, of a person (e.g., the police officer 113) who carries the terminal device 104. Further, the sensor may be a sensor that detects a position, direction, posture, motion, or the like of the terminal device 104 (or a person (e.g., the police officer 113) who carries the terminal device 104), such as a gyro sensor or GPS receiver. As a matter of course, the sensor may be other sensors. Specifications of each sensor are arbitrary.

Further, the sensor unit 181 may include a plurality of sensors. Furthermore, the sensor unit 181 may include a plurality of kinds of sensors that detects different kinds of information, such as, for example, the image sensor and the microphone. As a matter of course, the sensor unit 181 may include a plurality of kinds of sensors, each kind of sensor including a plurality of sensors, such as, for example, two image sensors, three temperature sensors, and four microphones. Further, a single sensor may detect a plurality of kinds of information.

Further, the sensor unit 181 may include a control unit that controls the sensor described above. Furthermore, the sensor unit 181 may also include a processing unit that processes the information detected by the sensor described above.

The sensor unit 181 can drive the sensor on the basis of the sensor control information supplied via the communication unit 183 and detect information. For example, the sensor unit 181 can set parameters regarding image capturing (e.g., exposure, a timing, a shutter speed, an image-capturing position, an image-capturing direction, an angle of view, and image processing) on the basis of the sensor control information, capture an image by using the image sensor, and generate a captured image. The information is arbitrary and may be any information as long as the information is detected by the sensor included in the sensor unit 181. For example, the information may be an image, a sound, biological information of a person (e.g., the police officer 113) who carries the terminal device 104, a position, direction, posture, motion, or the like of the terminal device 104 (or the person (e.g., the police officer 113) who carries the terminal device 104), a combination of two or more thereof, a combination of one or more of the information with other information, or only other information.

Further, the sensor unit 181 can transmit the detected information as the terminal detection information to another device (e.g., the base station 102 or the like) via the communication unit 183. Furthermore, the sensor unit 181 can analyze the detected information by a predetermined method and transmit an analysis result thereof as the terminal detection information to another device via the communication unit 183.

The output unit 182 has a configuration regarding output of information and performs processing regarding output of information. For example, the output unit 182 may include an output device. The output device may output arbitrary information. For example, the output device may be a device that outputs visual information. The device that outputs the visual information may be any device. For example, the device may be a display (e.g., a liquid crystal display (LCD) or the like) that displays an image, a projector that projects an image, or a light emitting body that emits light (e.g., a light emitting diode (LED) or the like). Further, the output device may be a device that outputs auditory information. The device that outputs the auditory information may be any device. For example, the device may be a speaker that outputs a sound. Further, the output device may be a device that vibrates the output device itself and outputs information by using an intensity, length, period, on/off timing, or the like of the vibration. The device that outputs information by the vibration may be any device. For example, the device may be a vibrator. As a matter of course, the output device may be a device that outputs other information.

Further, the output unit 182 may include a plurality of output devices. Furthermore, the output unit 182 may include a plurality of kinds of output devices that outputs different kinds of information, such as, for example, the display and the speaker. As a matter of course, the output unit 173 may include a plurality of kinds of output devices, each kind of output device including a plurality of output devices, such as, for example, two displays, three projectors, and four speakers. Further, a single output device may output a plurality of kinds of information.

Further, the output unit 182 may also include a control unit or the like that controls the output device. Furthermore, the output unit 182 may also include a processing unit that generates information to be output by the output device.

The output unit 182 can drive the output device on the basis of, for example, the output control information supplied via the communication unit 183 and output information to be supplied via the communication unit 183.

The communication unit 183 includes a communication interface and communicates with another device via the communication interface. A method (standard) of the communication is arbitrary and may be wireless communication, wired communication, or both.

The communication unit 183 can communicate with another device (e.g., the base station 102), receive information transmitted from the another device, and supply the control information to the sensor unit 181 or the output unit 182. Further, the communication unit 183 can transmit information supplied from the sensor unit 181 or the output unit 182 to another device (e.g., the base station 102). Furthermore, the communication unit 183 can store information regarding the terminal device 104 (referred to as "terminal information") in advance, such as identification information of the terminal device 104, and transmit the terminal information to another device (e.g., the base station 102).

Note that processing units of the sensor unit 181 to the communication unit 183 may each include a predetermined logic circuit and realize the processing described above by using the logic circuit. Alternatively, each processing unit may include, for example, a CPU, a ROM, a RAM, and the like and execute a program by using the CPU, the ROM, the RAM, and the like, thereby realizing the processing described above. As a matter of course, each processing unit may have both configurations, and a part of the processing described above may be realized by a logic circuit and the other parts thereof may be realized by executing a program.

Note that the configuration of each processing unit may be independent from each other. For example, some processing units may realize the processing by a logic circuit, some other processing units may realize the processing by executing a program, and the other processing units may realize the processing by both a logic circuit and execution of a program.

### <Central Control Server>

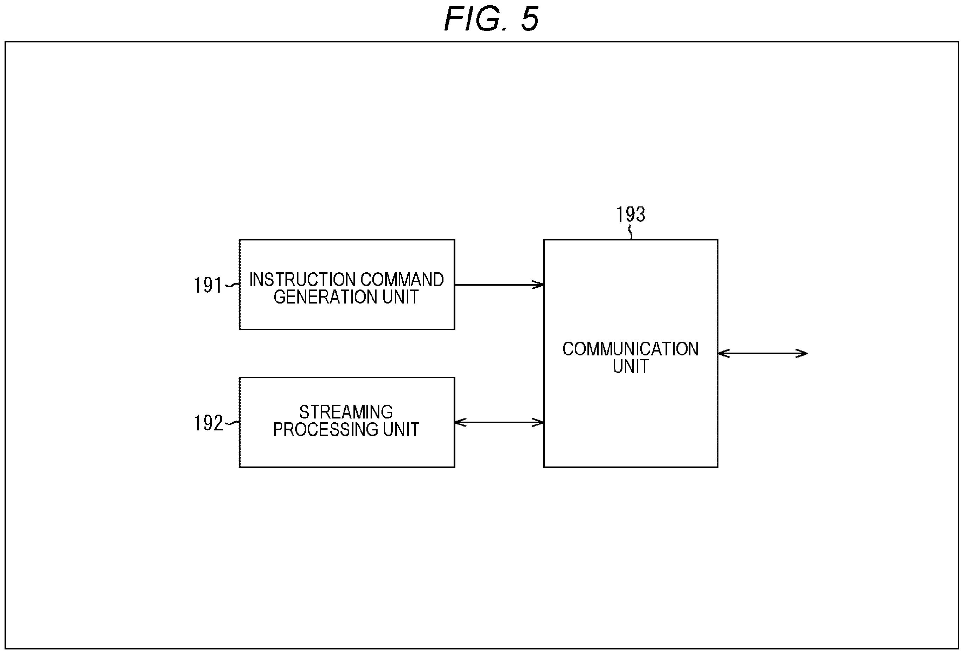

Fig. 5 is a block diagram illustrating an example of a main configuration of the central control server 105 that is an aspect of the information processing device to which the present technology is applied. As illustrated in Fig. 5, the central control server 105 includes an instruction command generation unit 191, a streaming processing unit 192, and a communication unit 193.

The instruction command generation unit 191 performs processing regarding generation of an instruction command for another device of the patrol support system 100. The instruction command generation unit 191 can accept a user (operator) operation on a user interface (not illustrated) and generate an instruction command on the basis of the user operation or the like. Further, the instruction command generation unit 191 can transmit the generated instruction command to another device (e.g., the base station 102 or the like) via the communication unit 193.

The streaming processing unit 192 performs processing regarding reproduction of streaming data. The streaming processing unit 192 can receive streaming data transmitted from another device (e.g., the base station 102 or the like) via the communication unit 193 and reproduce and display the received streaming data. Therefore, the operator can view the streamed captured image. Accordingly, the operator can more easily grasp a situation around the patrol car 101 or the police officer 113. This makes it possible to issue a more appropriate instruction command in accordance with the situation.

The communication unit 193 includes a communication interface and communicates with another device via the communication interface. A method (standard) of the communication is arbitrary and may be wireless communication, wired communication, or both.

The communication unit 193 can acquire the instruction command supplied from the instruction command generation unit 191 and transmit the instruction command to another device (e.g., the base station 102). Further, the communication unit 193 can receive streaming data transmitted from another device (e.g., the base station 102) and supply the streaming data to the streaming processing unit 192.

Note that processing units of the instruction command generation unit 191 to the communication unit 193 may each include a predetermined logic circuit and realize the processing described above by using the logic circuit. Alternatively, each processing unit may include, for example, a CPU, a ROM, a RAM, and the like and execute a program by using the CPU, the ROM, the RAM, and the like, thereby realizing the processing described above. As a matter of course, each processing unit may have both configurations, and a part of the processing described above may be realized by a logic circuit and the other parts thereof may be realized by executing a program.

Note that the configuration of each processing unit may be independent from each other. For example, some processing units may realize the processing by a logic circuit, some other processing units may realize the processing by executing a program, and the other processing units may realize the processing by both a logic circuit and execution of a program.

Because each device has the configuration described above and performs the processing described above, it is possible to provide more useful support for an activity of the target moving body.

### <1-5. Flow of Activity Support Processing>

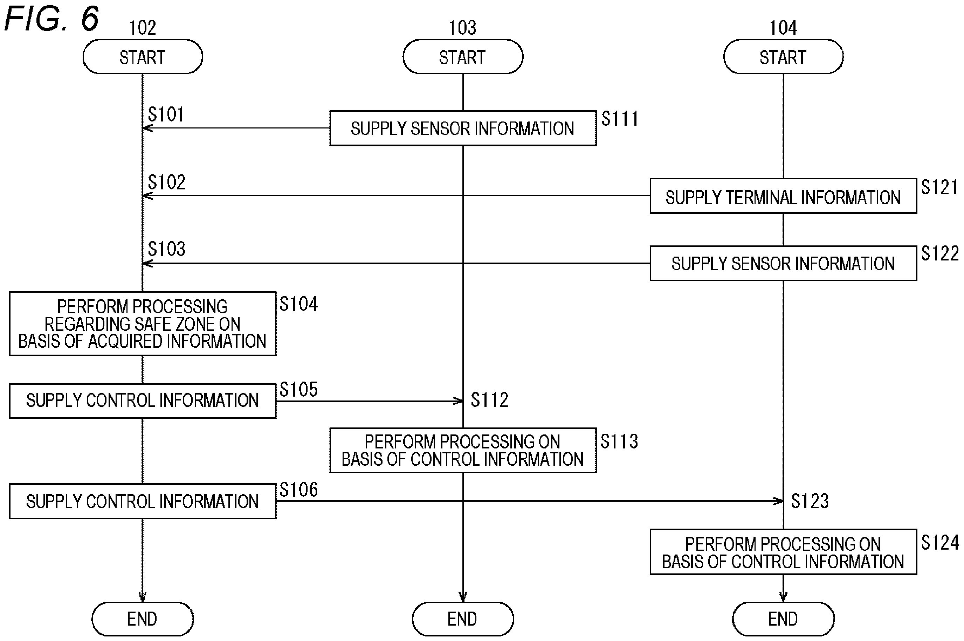

The base station 102 of the patrol support system 100 can perform processing regarding support for patrol (activity support processing) on the basis of information supplied from the flying object 103 and the terminal device 104. An example of a flow of such an activity support processing executed by the base station 102, the flying object 103, and the terminal device 104 of the patrol support system 100 will be described with reference to a flowchart of Fig. 6.

When the activity support processing is started, in step S111, the sensor unit 172 of the flying object 103 detects information by using the sensor and supplies the detected information as sensor information (flying object detection information) to the base station 102 via the communication unit 174. In step S101, the information acquisition unit 141 of the base station 102 acquires the sensor information (flying object detection information) supplied from the flying object 103 via the communication unit 132.

Further, in step S121, the communication unit 183 of the terminal device 104 supplies terminal information stored in advance to the base station 102. In step S102, the information acquisition unit 141 of the base station 102 acquires the terminal information supplied from the terminal device 104 via the communication unit 132.

Further, in step S122, the sensor unit 181 of the terminal device 104 detects information by using the sensor and supplies the detected information as sensor information (terminal detection information) to the base station 102 via the communication unit 183. In step S103, the information acquisition unit 141 of the base station 102 acquires the sensor information (terminal detection information) supplied from the terminal device 104 via the communication unit 132.

In step S104, the target person tracking unit 142 to the handling processing unit 145 of the base station 102 perform processing regarding the safe zone on the basis of the information acquired in steps S101 to S103.

In step S105, the flying object control unit 146 generates control information (flight control information, sensor control information, output control information, and the like) for controlling the flying object 103 on the basis of the processing result in step S104 and supplies the control information to the flying object 103 via the communication unit 132. In step S112, the communication unit 174 of the flying object 103 acquires the control information supplied from the base station 102. In step S113, the flying unit 171 to the output unit 173 perform output processing regarding support for patrol on the basis of the control information acquired in step S112.

In step S106, the terminal control unit 147 generates control information (sensor control information, output control information, and the like) for controlling the terminal device 104 on the basis of the processing result in step S104 and supplies the control information to the terminal device 104 via the communication unit 132. In step S123, the communication unit 183 of the terminal device 104 acquires the control information supplied from the base station 102. In step S124, the sensor unit 181 and the output unit 182 perform output processing regarding support for patrol on the basis of the control information acquired in step S123.

### <1-6. Overview of Identifying and Tracking Target Person>

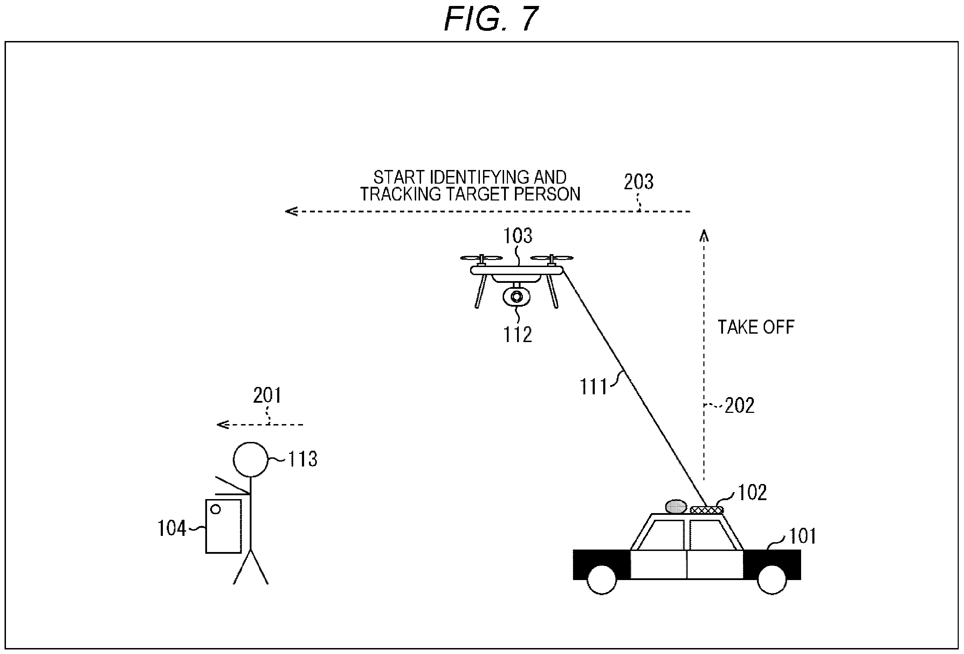

Next, a more specific example of the processing regarding support for patrol will be described. As illustrated in Fig. 7, a case where the patrol support system 100 supports patrol carried out by the police officer 113 will be described.

The police officer 113 carries the terminal device 104. Further, the police officer 113 rides in the patrol car 101 and moves, and, when arriving at a desired area, the police officer 113 gets off the patrol car 101 and patrols a neighborhood as indicated by a dotted arrow 201. During the patrol, the police officer 113 may have a higher risk of, for example, being attacked by a thug than ordinary people. Therefore, the patrol support system 100 monitors the police officer 113 and a surrounding area thereof, detects occurrence of a danger, abnormality, or the like, and notifies, for example, the police officer 113 or the like of the occurrence thereof, thereby supporting the police officer 113 to carry out patrol more safely.

In order to monitor the police officer 113 serving as the target moving body and the surrounding area thereof, the patrol support system 100 causes the flying object 103 to track the police officer 113. For this purpose, first, the target person tracking unit 142 of the base station 102 controls the flight of the flying object 103 via the flight control unit 151 and causes the flying object 103 to take off from the base station 102. More specifically, the flight control unit 151 generates control information for causing the flying object 103 to take off under the control of the target person tracking unit 142 and transmits the control information to the flying object 103 via the communication unit 132. The flying unit 171 of the flying object 103 acquires the control information via the communication unit 174, is driven on the basis of the control information, and causes the flying object 103 to take off from the base station 102, thereby causing the flying object 103 to start flying.

Next, the target person tracking unit 142 identifies the police officer 113 who is a target person (target moving body) and causes the flying object 103 to track the identified police officer 113 as indicated by a dotted arrow 203. For example, the target person tracking unit 142 may identify the police officer 113 on the basis of position information of the terminal device 104 carried by the police officer 113 or an image of the surrounding area of the police officer 113 including the police officer 113 and cause the flying object 103 to track the identified police officer 113.

The police officer 113 can be identified on the basis of the flying object detection information (e.g., target-moving-body-related information regarding the police officer 113) detected by the sensor unit 172 of the flying object 103. The flying object detection information may be any information as long as the information is detected by the sensor unit 172.

For example, the police officer 113 may be identified on the basis of a captured image of the police officer 113 captured by the sensor unit 172. That is, the captured image of the police officer 113 or the like may be used as the target-moving-body-related information. In that case, for example, the target person tracking unit 142 of the base station 102 controls the sensor unit 172 of the flying object 103 via the sensor control unit 152 to capture an image of the police officer 113 by using the image sensor or the like (e.g., the camera 112). Then, the target person tracking unit 142 of the base station 102 acquires the captured image (target-moving-body-related information) from the flying object 103 via the information acquisition unit 141, performs image analysis, recognizes a uniform, identification card, badge, or the like of the police officer 113, and identifies the police officer 113 on the basis of a recognition result thereof.

Further, for example, the police officer 113 may be identified on the basis of a voice of the police officer 113 recorded by the sensor unit 172. That is, the voice of the police officer 113 or the like may be used as the target-moving-body-related information. In that case, for example, the target person tracking unit 142 of the base station 102 controls the sensor unit 172 of the flying object 103 via the sensor control unit 152 to record the voice of the police officer 113 by using the microphone or the like. Then, the target person tracking unit 142 of the base station 102 acquires data of the voice (voice of the police officer 113) as the target-moving-body-related information from the flying object 103 via the information acquisition unit 141, performs voice analysis, recognizes the voice of the police officer 113, and identifies the police officer 113 on the basis of a recognition result thereof.

Further, the police officer 113 can be identified on the basis of the sensor information (terminal detection information) detected by the sensor unit 181 of the terminal device 104. The terminal detection information may be any information as long as the information is detected by the sensor unit 181.

For example, the police officer 113 may be identified on the basis of a captured image of the police officer 113 captured by the sensor unit 181. That is, the captured image of the police officer 113 may be used as a terminal detection image. In that case, for example, the target person tracking unit 142 of the base station 102 controls the sensor unit 181 of the terminal device 104 via the sensor control unit 161 to capture an image of the police officer 113 by using the image sensor or the like. Then, the target person tracking unit 142 of the base station 102 acquires the captured image (terminal detection information) of the police officer 113 from the terminal device 104 via the information acquisition unit 141, performs image analysis, recognizes the uniform, identification card, badge, or the like of the police officer 113, and identifies the police officer 113 on the basis of a recognition result thereof.

Further, for example, the police officer 113 may be identified on the basis of a voice of the police officer 113 recorded by the sensor unit 181. That is, the captured image of the police officer 113 may be used as the terminal detection information. In that case, for example, the target person tracking unit 142 of the base station 102 controls the sensor unit 181 of the terminal device 104 via the sensor control unit 161 to record the voice of the police officer 113 by using the microphone or the like. Then, the target person tracking unit 142 of the base station 102 acquires data of the voice (voice of the police officer 113) as the terminal detection information from the terminal device 104 via the information acquisition unit 141, performs voice analysis, recognizes the voice of the police officer 113, and identifies the police officer 113 on the basis of a recognition result thereof.

Further, for example, the police officer 113 may be identified on the basis of a position of the terminal device 104 (police officer 113) detected by the sensor unit 181 or the like. That is, this position information of the police officer 113 may be used as the terminal detection information. In that case, for example, the target person tracking unit 142 of the base station 102 controls the sensor unit 181 of the terminal device 104 via the sensor control unit 161 to detect the position or the like of the terminal device 104 (police officer 113) by using the gyro sensor, the GPS receiver, or the like. Then, the target person tracking unit 142 of the base station 102 acquires data of the position (position or the like of the terminal device 104) as the terminal detection information from the terminal device 104 via the information acquisition unit 141, analyzes the data, recognizes the position or the like of the police officer 113, and identifies the police officer 113 on the basis of a recognition result thereof.

By applying those methods, the target person tracking unit 142 can more easily identify the target person by using general sensors (without requiring special sensors). This makes it possible to restrain an increase in cost (identify the target person more inexpensively).

Further, the police officer 113 can be identified on the basis of the terminal information of the terminal device 104. The terminal information may be any information as long as the information can identify the terminal device 104.

For example, the police officer 113 may be identified on the basis of the terminal information of the terminal device 104 carried by the police officer 113. In that case, for example, the target person tracking unit 142 of the base station 102 acquires the terminal information from the terminal device 104 via the information acquisition unit 141 and identifies the police officer 113 on the basis of the terminal information.

By applying such a method, the target person tracking unit 142 can more easily identify the target person by using the identification information or the like of the terminal device carried by the police officer 113. This makes it possible to restrain an increase in cost (identify the target person more inexpensively).

Note that a method of identifying the police officer 113 is arbitrary and is not limited to the above examples. For example, a plurality of methods in the above examples may be applied in combination. For example, the target person tracking unit 142 may identify the police officer 113 by using a plurality of pieces of information in the above examples. Further, any one of the methods in the above examples and another method not described in the above examples may be applied in combination. For example, the target person tracking unit 142 may identify the police officer 113 by using any information in the above examples and other information not described above.

When the target person (police officer 113) is identified, the target person tracking unit 142 causes the flying object 103 to track the identified target person. The flight control unit 151 of the flying object control unit 146 generates flight control information on the basis of the instruction and transmits the flight control information to the flying object 103, thereby controlling the flight of the flying object 103 to cause the flying object 103 to track the target person. The flying object 103 flies under the control thereof and flies above a head of the identified police officer 113.

When the tracking is started, the target person tracking unit 142 repeatedly or continuously identifies the police officer 113 as described above, updates the position of the identified police officer 113, and causes the flying object 103 to track the latest position of the police officer 113.

### <1-7. Flow of Tracking Processing>

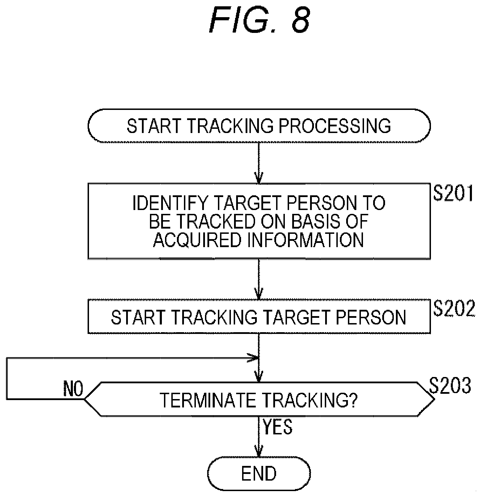

In order to realize the identification and tracking of the target person described above, the target person tracking unit 142 executes tracking processing as the process in step S104 of Fig. 6. An example of a flow of the tracking processing will be described with reference to a flowchart of Fig. 8.

When the tracking processing is started, in step S201, the target person tracking unit 142 acquires information necessary for identifying the police officer 113, such as, for example, the sensor information (the flying object detection information and the terminal detection information) or the terminal information, from the flying object 103, the terminal device 104, or both via the information acquisition unit 141. The target person tracking unit 142 identifies a target person (police officer 113) to be tracked on the basis of the acquired information (the sensor information, the terminal information, or both).

When the police officer 113 to be tracked is identified by the process in step S201, the target person tracking unit 142 controls the flying object 103 via the flight control unit 151 to start tracking the identified police officer 113 in step S202. The flying unit 171 of the flying object 103 is driven under the control thereof and flies the flying object 103 to track the police officer 113.

In step S203, the target person tracking unit 142 determines whether or not to terminate the tracking and waits until it is determined to terminate the tracking. For example, in a case where a predetermined condition is satisfied or an instruction is issued and thus it is determined to terminate the tracking, the target person tracking unit 142 terminates the tracking processing.

By executing the tracking processing as described above, the target person tracking unit 142 can more easily identify the police officer 113 and track the identified police officer 113.

### <1-8. Setting of Safe Zone>

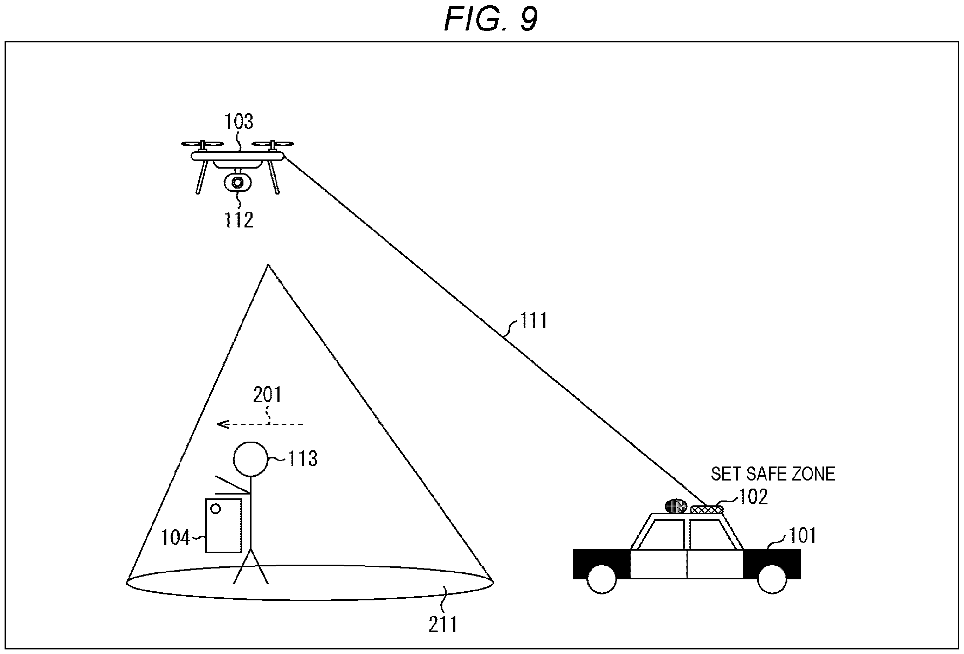

When the tracking of the target person is started, the zone setting unit 143 of the base station 102 sets a safe zone 211 as a region to be monitored by the monitoring unit 144, as illustrated in Fig. 9. At that time, the zone setting unit 143 sets the safe zone 211 on the basis of the target-moving-body-related information regarding the police officer 113 detected by (the sensor unit 172 of) the flying object 103.

For example, the zone setting unit 143 may set the safe zone 211 on the basis of the target-moving-body-related information detected by the sensor unit 172 (e.g., information such as an image, sound, temperature distribution, or distance in a surrounding area of the police officer 113 including the police officer 113 (information including at least one thereof)).

Because the flying object 103 is movable, the flying object 103 can detect information (target-moving-body-related information) regarding the surrounding area of the police officer 113 from an arbitrary position. Therefore, for example, it is possible to detect the target-moving-body-related information at a more suitable position such as a position at which more accurate information can be obtained. Therefore, by using the target-moving-body-related information detected by the sensor unit 172 of the flying object 103, the zone setting unit 143 can set the safe zone 211 on the basis of more accurate information. That is, the zone setting unit 143 can more accurately set the safe zone 211. Further, the monitoring unit 144 can more accurately specify a range of the set safe zone 211, and therefore it is possible to restrain a decrease in accuracy of monitoring of the safe zone 211 (more typically, improve the accuracy).

Note that the safe zone 211 may be any region as long as predetermined information is detectable by (the sensor unit 172 of) the flying object 103. For example, the safe zone 211 has an arbitrary shape. The safe zone 211 may be a two-dimensional region or three-dimensional region. For example, the zone setting unit 143 may set a two-dimensional region in a predetermined range on the ground as the safe zone 211. In that case, the safe zone 211 may have any shape as long as the shape is two dimensional and may have, for example, a circular shape, a rectangular shape, or other shapes. Further, for example, the zone setting unit 143 may set a three-dimensional region in a predetermined range of a space as the safe zone 211. In that case, the safe zone 211 may have any shape as long as the shape is three dimensional and may have, for example, a conical shape as illustrated in Fig. 9, a rectangular parallelepiped shape, or other shapes.

Further, the safe zone 211 may have any size. For example, the range of the safe zone 211 may be wider or narrower than a range detectable by the sensor included in the sensor unit 172 of the flying object 103. For example, in a case where the range of the safe zone 211 is wider than an angle of view of the image sensor included in the sensor unit 172 and thus the image sensor cannot capture an image of the entire safe zone 211 at a time, an image of the entire safe zone 211 may be captured by capturing an image of the safe zone 211 a plurality of times while moving the flying object 103 or changing an image-capturing posture of the image sensor.

Note that the zone setting unit 143 may set the safe zone 211 by also using depth information regarding the surrounding area of the police officer 113. That is, the depth information may be included in the target-moving-body-related information. A method of deriving the depth information is arbitrary. For example, the flight control unit 151 may move the flying object 103, and the sensor control unit 152 may cause the sensor unit 172 to capture images of the surrounding area of the police officer 113 at a plurality of angles and derive the depth information by using parallax of the captured images. Further, the sensor unit 172 may capture images of the surrounding area of the police officer 113 by using a plurality of cameras and derive the depth information by using parallax of the captured images. Furthermore, the sensor unit 172 may derive the depth information by using a distance sensor or the like. As a matter of course, the depth information may be derived by an arbitrary processing unit other than the sensor unit 172.

The zone setting unit 143 can more accurately set the safe zone 211 by using the depth information. Further, the monitoring unit 144 can more accurately specify a range of the set safe zone 211, and therefore it is possible to restrain a decrease in accuracy of monitoring of the safe zone 211 (more typically, improve the accuracy).

Further, for example, the zone setting unit 143 may set the safe zone 211 on the basis of not only the target-moving-body-related information but also the terminal detection information detected by (the sensor unit 181 of) the terminal device 104 carried by the police officer 113. For example, the terminal detection information may include an image or sound in the field-of-view direction of the police officer 113, an image or voice of the police officer 113, biological information of the police officer 113, or information regarding a position, direction, or posture of the police officer 113 detected by the sensor unit 181 (may include at least one thereof). That is, the safe zone 211 may be set on the basis of those pieces of information.

By using more various kinds of information as described above, the zone setting unit 143 can more accurately set the safe zone 211. Further, the monitoring unit 144 can more accurately specify a range of the set safe zone 211, and therefore it is possible to restrain a decrease in accuracy of monitoring of the safe zone 211 (more typically, improve the accuracy).

In a case where such a safe zone 211 is set, for example, the zone setting unit 143 may set, as the safe zone 211, a predetermined region at a predetermined relative position with respect to the police officer 113, the predetermined region being a region where predetermined information is detectable by (the camera 112 of) the flying object 103. For example, the zone setting unit 143 may set a region around the police officer 113 in a predetermined direction as the safe zone 211. For example, the zone setting unit 143 may set the safe zone 211 so as to include a region behind the police officer 113. Further, for example, the zone setting unit 143 may set a region in a predetermined range including the blind spot of the police officer 113 as the safe zone 211.

By setting the safe zone 211 so as to include the blind spot of the police officer 113 as described above, the monitoring unit 144 can monitor a region (e.g., the blind spot) where exercising caution is difficult for the police officer 113. Herein, the region where exercising caution is difficult means, for example, an angle (predetermined direction) at which the police officer cannot perform visual recognition due to a direction of the face or direction of the eyes, for example, a rear region. Therefore, the handling processing unit 145 can provide more useful information for the police officer 113. That is, the patrol support system 100 can provide more useful support for an activity of the target moving body.

In the setting of the safe zone 211 described above, the zone setting unit 143 may set a region around the police officer 113 in a predetermined direction as the safe zone 211. The zone setting unit 143 may identify a range of the blind spot of the police officer 113 in a region around the police officer 113 and set a region including the identified range as the safe zone 211. For example, the zone setting unit 143 may identify a moving direction, a direction of the face, a line-of-sight direction, and the like of the police officer 113, identify the range of the blind spot of the police officer 113 on the basis of those pieces of information, and set the safe zone 211 so as to include a part of or the entire blind spot.

The moving direction, the direction of the face, the line-of-sight direction, and the like of the police officer 113 (i.e., the blind spot of the police officer 113) can be identified on the basis of arbitrary information. For example, the zone setting unit 143 may identify the moving direction, the direction of the face, the line-of-sight direction, and the like on the basis of, for example, an image of the police officer 113 captured by the image sensor included in the sensor unit 172 of the flying object 103. Because the flying object 103 is movable, the image sensor included in the sensor unit 172 can capture an image of the police officer 113 from an arbitrary position. That is, it is possible to easily capture an image from a position from which the face of the police officer 113 can be clearly seen (e.g., from the front or the like). Therefore, by using the captured image, the zone setting unit 143 can more accurately identify the moving direction, the direction of the face, the line-of-sight direction, and the like of the police officer 113.

In other words, the image sensor included in the sensor unit 172 can more easily capture an image from a position from which the range of the blind spot of the police officer 113 can be more accurately identified. That is, by using the captured image, the zone setting unit 143 can more accurately identify the range of the blind spot of the police officer 113. Therefore, the zone setting unit 143 can more easily set a more accurate safe zone 211.

In addition, because the flying object 103 is movable, the image sensor included in the sensor unit 172 can always capture an image from a suitable position even in a case where the police officer 113 serving as a moving body is a target. That is, by using the captured image captured by the image sensor, the zone setting unit 143 can more accurately set the safe zone 211 for the target serving as the moving body.

Further, the zone setting unit 143 may identify the range of the blind spot of the police officer by using not only the image or the like but also, for example, an image of the face or eyes of the police officer 113 and an image of a region in a forward direction of the police officer 113 captured by the image sensor included in the sensor unit 181 of the terminal device 104 carried by the police officer 113 or information regarding the position and posture of the police officer 113 derived by using the gyro sensor, the GPS receiver, and the like included in the sensor unit 181. This makes it possible to more accurately identify the range of the blind spot of the police officer 113.

Note that the blind spot of the police officer 113 may include, for example, a region outside the field of view of the police officer 113 (e.g., the region behind the police officer 113, or the like). For example, the zone setting unit 143 can easily identify the field of view of the police officer 113 (i.e., the region outside the field of view of the police officer 113) by identifying the moving direction, the direction of the face, the line-of-sight direction, and the like of the police officer 113 as described above. The zone setting unit 143 may set the safe zone 211 so as to include the region outside the field of view of the police officer 113 identified as described above.

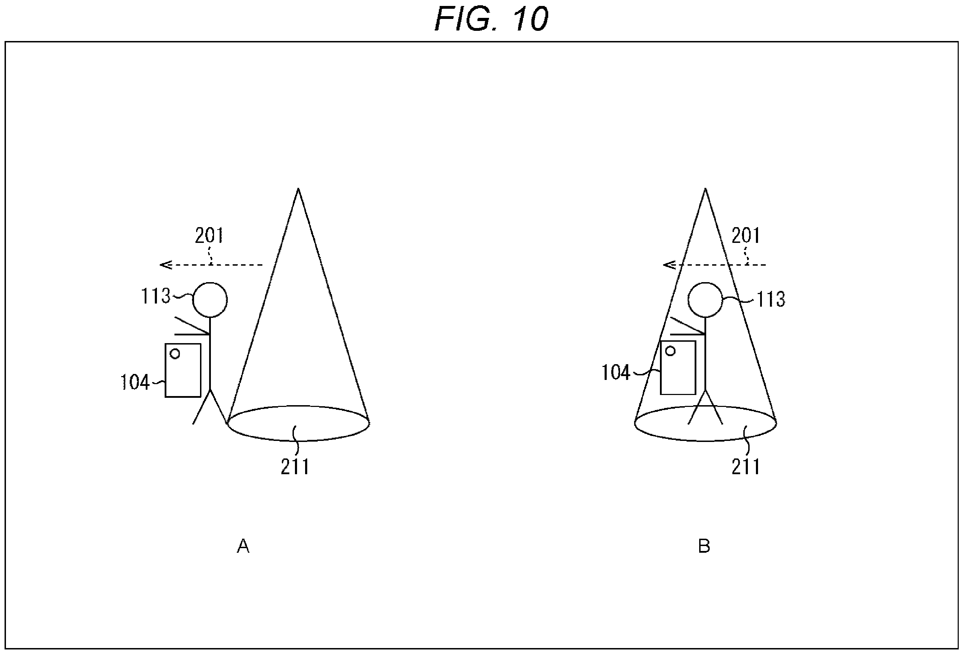

For example, as illustrated in A of Fig. 10, the zone setting unit 143 may set only the region behind the police officer 113 as the safe zone 211. That is, the zone setting unit 143 may set the safe zone 211 so as not to include the position of the police officer 113. Meanwhile, as illustrated in B of Fig. 10, for example, the zone setting unit 143 may set the safe zone 211 so as to include both the position of the police officer 113 and the region behind the police officer 113. In that case, the zone setting unit 143 may set the safe zone 211 so that the region outside the field of view of the police officer 113 is wider than a region in the field of view of the police officer 113. For example, the zone setting unit 143 may set the safe zone 211 so that the region behind the police officer 113 is wider than a region in front of the police officer 113.

Note that, when the police officer 113 is tracked by the flying object 103, the flying object 103 may be positioned in front of (the face or the line of sight of) the police officer 113, and the image sensor included in the sensor unit 172 of the flying object 103 may capture an image of the police officer 113 and the surrounding area thereof from the front of the police officer 113. Capturing an image as described above makes it possible not only to capture an image from a position from which the face of the police officer can be clearly seen but also to more easily capture an image of the region behind the police officer 113. Therefore, the zone setting unit 143 can more easily set the safe zone 211 so as to include the range of the blind spot of the police officer 113.

Note that the region behind the police officer 113 has been used as an example of the outside of the field of view of the police officer 113 in the above description. However, the blind spot of the police officer 113 is not limited thereto and may be, for example, a side region of the police officer 113. Further, for example, a range of the blind spot of the police officer 113, in which sensing a danger or abnormality is difficult for the police officer 113, may be set as the safe zone 211 so as to be wider than a range in which sensing a danger or abnormality is easy. For example, it is generally easier to sense a danger or abnormality in a side region than in a rear region. Therefore, the zone setting unit 143 may set the safe zone 211 so that the region behind the police officer 113 is wider than the side region of the police officer 113.

Further, the blind spot of the police officer 113 may include, for example, a region where the field of view of the police officer 113 is blocked by an obstacle or the like. For example, the zone setting unit 143 may identify an obstacle around the police officer 113 (an object that blocks the field of view of the police officer 113), identify a range of the blind spot of the police officer 113 (a region that cannot be seen by the police officer 113 due to the obstacle) on the basis of information thereof and a range of the field of view of the police officer 113 identified as described above, and set the safe zone 211.

The obstacle may be identified on the basis of arbitrary information. For example, the zone setting unit 143 may identify the obstacle on the basis of, for example, an image of the surrounding area of the police officer 113 captured by the image sensor included in the sensor unit 172 of the flying object 103. Because the flying object 103 is movable, the flying object 103 can more easily capture an image from a position from which the obstacle is more easily identified. That is, this makes it possible for the zone setting unit 143 to more accurately identify the obstacle.

Further, because the flying object 103 is movable, the flying object 103 can more easily capture an image of a range including the region where the field of view of the police officer 113 is blocked by the obstacle or the like. For example, the flying object 103 can also easily capture an image while going around to a back side of the obstacle seen from the police officer 113. That is, this makes it possible for the zone setting unit 143 to more accurately identify the region where the field of view of the police officer 113 is blocked by the obstacle or the like.

Further, the zone setting unit 143 may identify the obstacle by using not only the image or the like but also, for example, the image of the region in the forward direction of the police officer 113 captured by the image sensor included in the sensor unit 181 of the terminal device 104 carried by the police officer 113. This makes it possible for the zone setting unit 143 to more accurately identify the obstacle or to identify the region where the field of view of the police officer 113 is blocked by the obstacle or the like.

Note that the zone setting unit 143 may set the safe zone 211 so as to include the region where the field of view of the police officer 113 is blocked by the obstacle or the like identified as described above. By applying the method described above, it is possible to more easily identify a region where the field of view of the police officer 113 is blocked by an obstacle 212. Therefore, the zone setting unit 143 can more easily set the safe zone 211 so as to include the range of the blind spot of the police officer 113 (the region where the field of view of the police officer 113 is blocked by the obstacle or the like).

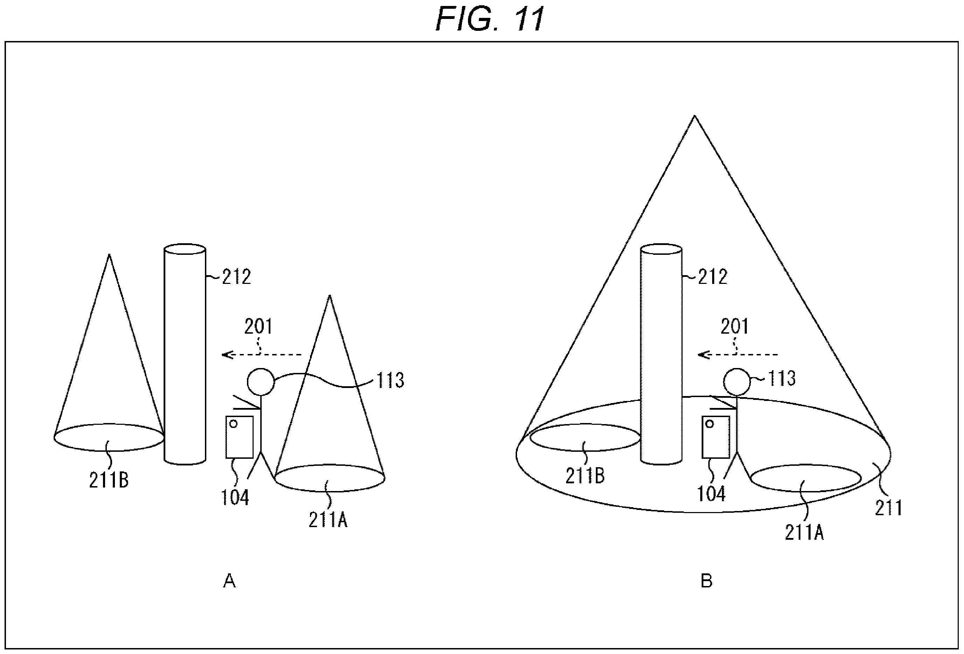

For example, as illustrated in A of Fig. 11, the zone setting unit 143 may set a safe zone 211A including the region behind the police officer 113 and a safe zone 211B including the region where the field of view of the police officer 113 is blocked by the obstacle 212. That is, a plurality of safe zones 211 can be set. In that case, a range of each safe zone 211 can be set independently from each other. That is, a shape and size of each safe zone 211 are arbitrary and may be the same or not the same.

Further, as illustrated in B of Fig. 11, the zone setting unit 143 may set a single safe zone 211 including both the safe zone 211A including the region behind the police officer 113 and the safe zone 211B including the region where the field of view of the police officer 113 is blocked by the obstacle 212.

Note that, because the flying object 103 is movable as described above, the flying object 103 can more easily detect information at an arbitrary position. Thus, the zone setting unit 143 sets the safe zone 211 on the basis of the information detected by the flying object 103 and can therefore more easily set an arbitrary number of safe zones 211 having an arbitrary shape and arbitrary size at an arbitrary position. Therefore, the zone setting unit 143 can set a more appropriate number of safe zones 211 having a more appropriate shape and size at a more appropriate position so that more useful information for the police officer 113 can be provided. That is, the patrol support system 100 can provide more useful support for an activity of the target moving body.

### <1-9. Flow of Safe Zone Setting Processing>

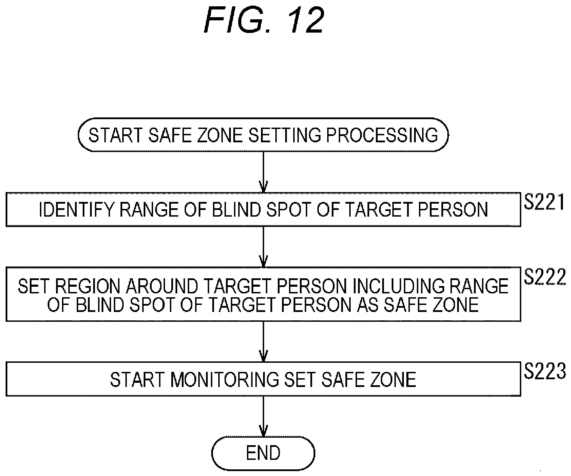

In order to set the safe zone as described above, the zone setting unit 143 executes safe zone setting processing as the process in step S104 of Fig. 6. An example of a flow of the safe zone setting processing will be described with reference to a flowchart of Fig. 12.

When the safe zone setting processing is started, in step S221, as described above, the zone setting unit 143 acquires target-moving-body-related information or the like from the flying object 103 or the like via the information acquisition unit 141 and identifies a range of a blind spot of a target person (police officer 113) on the basis of the information.

In step S222, as described above, the zone setting unit 143 sets, as the safe zone 211, a region around the target person including the range of the blind spot of the target person identified in step S221.

In step S223, the monitoring unit 144 starts monitoring the safe zone 211 set in step S222 (detecting an event occurring in the safe zone 211).

When the process in step S223 terminates, the safe zone setting processing terminates.

By executing the safe zone setting processing as described above, the zone setting unit 143 can more easily set the safe zone 211. Further, the monitoring unit 144 can start monitoring the safe zone 211.

<1-10. Detection and Handling of Event>

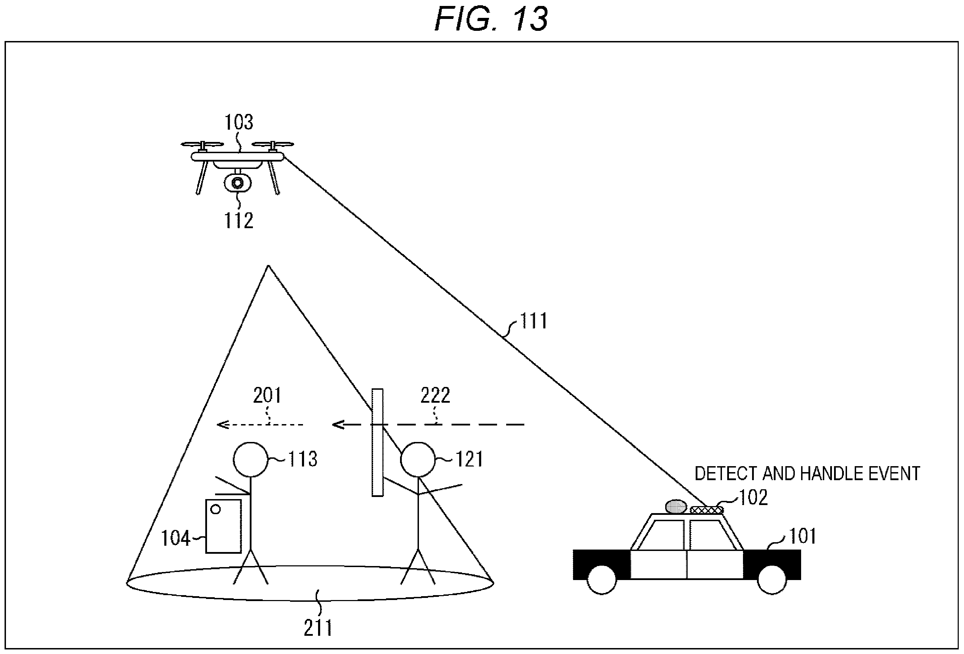

When the safe zone 211 is set, as illustrated in Fig. 13, the monitoring unit 144 of the base station 102 monitors the safe zone 211 and detects a predetermined event occurring in the safe zone 211. Further, when an event is detected by the monitoring unit 144, the handling processing unit 145 of the base station 102 performs processing corresponding to the detected event.

The event can be detected by the monitoring unit 144 on the basis of arbitrary information. For example, the monitoring unit 144 may detect the event on the basis of the sensor information detected by the sensor included in the sensor unit 172 of the flying object 103. For example, the monitoring unit 144 may detect the event on the basis of a captured image of the safe zone 211 captured by the image sensor included in the sensor unit 172, a sound in the vicinity of the safe zone 211 recorded by the microphone included in the sensor unit 172, a temperature distribution in the safe zone 211 detected by the temperature sensor included in the sensor unit 172, or the like. As a matter of course, the monitoring unit 144 may detect the event on the basis of sensor information other than the above examples or may detect the event on the basis of a plurality of kinds of sensor information. Because the flying object 103 is movable, the sensor unit 172 can detect information at a position at which more accurate information is detectable. Therefore, the monitoring unit 144 can more accurately detect the event by using the sensor information detected by the sensor included in the sensor unit 172.

Note that the monitoring unit 144 can also detect the event on the basis of information other than the information detected by the sensor unit 172. For example, the monitoring unit 144 can also detect the event on the basis of the sensor information detected by the sensor included in the sensor unit 181 of the terminal device 104 possessed by the police officer 113. Further, the monitoring unit 144 can also detect the event by using both the information detected by the sensor unit 172 and the information detected by the sensor unit 181.

The event to be detected is arbitrary. For example, the monitoring unit 144 may detect, as the event, detection of an intruding moving body that has intruded into the safe zone 211. For example, the monitoring unit 144 may detect the event on the basis of arbitrary information. For example, the monitoring unit 144 may detect the intruding moving body that has intruded into the safe zone 211 on the basis of the captured image of the safe zone 211 captured by the image sensor of the sensor unit 172.

In that case, the monitoring unit 144 may detect detection of all intruding moving bodies as the event. Further, for example, the monitoring unit 144 may detect, as the event, intrusion of a suspicious person 221 into the safe zone 211 as indicated by a dotted arrow 222 in Fig. 9. That is, the monitoring unit 144 may detect an intruding moving body that has intruded into the safe zone 211, then determine whether or not the intruding moving body is the suspicious person 221, and detect the intrusion as the event in a case where the intruding moving body is the suspicious person 221. That is, the monitoring unit 144 may detect the event by using a plurality of conditions. This makes it possible for the monitoring unit 144 to more specifically detect the event (detect intrusion of the suspicious person 221 instead of intrusion of the intruding moving body). Therefore, the handling processing unit 145 can perform more appropriate processing for the event. That is, the patrol support system 100 can provide more useful support for an activity of the target moving body.

Note that a method of determining whether or not the intruding moving body is a suspicious person is arbitrary. For example, the monitoring unit 144 may identify a shape, motion, and the like of the intruding moving body detected from the captured image by image analysis, determine, for example, whether or not the intruding moving body is a person who possesses a weapon, whether or not the intruding moving body is a person who is attacking the police officer 113, and whether or not the intruding moving body is a person registered in, for example, registration information prepared in advance such as a criminal database, and determine whether or not the intruding moving body is the suspicious person 221 on the basis of determination results thereof.

Further, for example, the monitoring unit 144 may detect, as the event, a change in state (occurrence of an abnormality) of the police officer 113 who is a target person. The change in state (occurrence of an abnormality) of the police officer 113 indicates that the police officer 113 cannot normally carry out patrol due to, for example, injury or mental instability. The monitoring unit 144 can detect the event on the basis of arbitrary information. For example, the monitoring unit 144 may detect the change in state (occurrence of an abnormality) of the police officer 113 on the basis of the captured image of the police officer 113 captured by the image sensor of the sensor unit 172. Further, for example, the monitoring unit 144 may detect the change in state (occurrence of an abnormality) of the police officer 113 on the basis of biological information (e.g., a heart rate, pulse, exhalation, amount of perspiration, and the like) of the police officer 113 detected by the biological sensor or the like of the sensor unit 181.

Note that the monitoring unit 144 may detect an event occurring outside the safe zone 211. For example, the monitoring unit 144 may detect a sound of gunfire or explosion generated outside the safe zone 211 as the event on the basis of sound information detected by the sensor unit 172. For example, the sensor unit 172 may detect a sound in the vicinity of the safe zone 211 by using a plurality of microphones having directivity in different directions, and the monitoring unit 144 may detect generation of the sound of gunfire or explosion on the basis of sound information thereof and further identify a direction in which the sound of gunfire or explosion has been generated.

The processing corresponding to the event, which is performed by the handling processing unit 145, is arbitrary. For example, the handling processing unit 145 may perform, as the processing, processing regarding notification regarding the detected event. Content of the notification regarding the event is arbitrary. For example, the notification may be notification that the event has occurred. Further, the notification may be presentation of information related to the event (e.g., supplementary information). Further, a target of the notification is arbitrary. For example, the handling processing unit 145 may perform processing regarding the notification to be given to the police officer 113 (target person). Note that the notification may be given to a person other than the police officer 113.

A method of the notification is arbitrary. For example, the handling processing unit 145 may make the notification by using visual information such as an image and light. Further, the handling processing unit 145 may make the notification by using auditory information such as a sound. Furthermore, the handling processing unit 145 may make the notification by using vibration or the like.

Further, an arbitrary device makes the notification. For example, the flying object 103 may make the notification. In that case, the handling processing unit 145 controls the output unit 173 of the flying object 103 via the output control unit 153 to cause the output device thereof to make the notification. For example, the handling processing unit 145 can cause the display such as an LCD included in the output unit 173 to display an image for making the notification of the occurrence of the event. Further, the handling processing unit 145 can cause the projector included in the output unit 173 to project the image for making the notification of the occurrence of the event. Furthermore, the handling processing unit 145 can cause the light emitting body such as an LED included in the output unit 173 to emit light having a pattern indicating the occurrence of the event. Still further, the handling processing unit 145 can cause the speaker included in the output unit 173 to output a sound for making the notification of the occurrence of the event.

Further, the flying object 103 may make the notification by a plurality of methods among those methods. Furthermore, the flying object 103 may make the notification by a method other than the examples described above.

Further, for example, the terminal device 104 may make the notification. In that case, the handling processing unit 145 controls the output unit 182 of the terminal device 104 via the output control unit 162 to cause the output device thereof to make the notification. For example, the handling processing unit 145 can cause the display such as an LCD included in the output unit 182 to display an image for making the notification of the occurrence of the event. Further, the handling processing unit 145 can cause the projector included in the output unit 182 to project the image for making the notification of the occurrence of the event.

Furthermore, the handling processing unit 145 can cause the light emitting body such as an LED included in the output unit 182 to emit light having a pattern indicating the occurrence of the event. Still further, the handling processing unit 145 can cause the speaker included in the output unit 182 to output a sound for making the notification of the occurrence of the event. Moreover, the handling processing unit 145 can vibrate the vibrator included in the output unit 182 with a pattern indicating the occurrence of the event.

Further, the terminal device 104 may make the notification by a plurality of methods among those methods. Furthermore, the terminal device 104 may make the notification by a method other than the examples described above.

Further, the notification may be made by both the flying object 103 and the terminal device 104. As a matter of course, the notification may be made by a device other than the flying object 103 or the terminal device 104. For example, the notification may be made by the patrol car 101 or the central control server 105. In that case, the handling processing unit 145 supplies information regarding the notification to the device.

Further, the monitoring unit 144 may evaluate the detected event. For example, the monitoring unit 144 may evaluate the degree of importance of the detected event. A criterion of the degree of importance of the event is arbitrary. For example, the monitoring unit 144 may evaluate the degree of importance on the basis of the degree of danger or a degree of urgency of the detected event.

A method of determining the degree of danger or degree of urgency of the event is arbitrary. For example, the monitoring unit 144 may determine the degree of danger or degree of urgency on the basis of content of the detected event. For example, in a case where intrusion of an intruding moving body into the safe zone 211 is detected as the event as in the example described above, the degree of danger or degree of urgency (i.e., the degree of importance) of the detected event may be evaluated on the basis of information regarding the intruding moving body.

Content of the information regarding the intruding moving body used for the evaluation of the degree of importance is arbitrary. For example, in a case where an intrusion direction of the intruding moving body into the safe zone 211 is a direction toward the police officer 113 (target person), there is a high possibility that the intruding moving body approaches the police officer 113, and there is a high possibility that the police officer 113 becomes dangerous, as compared with a case where the intrusion direction is other directions. Therefore, in a case where the intrusion direction of the intruding moving body is the direction toward the police officer 113 (target person), the monitoring unit 144 sets the degree of danger (degree of importance) of the event higher than that in a case where the intrusion direction is other directions. As described above, the monitoring unit 144 may evaluate the degree of importance of the event in accordance with the intrusion direction of the intruding moving body.

Further, for example, as an approach speed (relative speed) of the intruding moving body to the police officer 113 (target person) is higher, there is a high possibility that the intruding moving body approaches the police officer 113 earlier, and there is a high possibility that the police officer 113 becomes dangerous earlier. Therefore, the monitoring unit 144 sets the degree of urgency (degree of importance) of the event higher as the approach speed of the intruding moving body to the police officer 113 (target person) is higher. As described above, the monitoring unit 144 may evaluate the degree of importance of the event in accordance with the approach speed of the intruding moving body to the police officer 113.

Further, for example, in a case where it is determined that the intruding moving body is the suspicious person 221 who possesses a weapon, there is a high possibility that the police officer 113 is attacked by the suspicious person 221, and there is a higher possibility that the police officer 113 becomes dangerous, as compared with a case where the suspicious person 221 does not possess a weapon or the intruding moving body is not the suspicious person 221. Therefore, in a case where it is determined that the intruding moving body is the suspicious person 221 who possesses a weapon, the monitoring unit 144 sets the degree of danger (degree of importance) of the event higher than that in other cases. As described above, the monitoring unit 144 may evaluate the degree of importance of the event depending on whether or not the intruding moving body is the suspicious person 221 who possesses a weapon. Note that an aspect of the intruding moving body (or a component of the intruding moving body) used for the evaluation of the degree of importance of the event is arbitrary and is not limited to the example described above (the suspicious person 221 who possesses a weapon). That is, the monitoring unit 144 may evaluate the degree of importance of the event on the basis of information regarding the aspect of the intruding moving body (or the component of the intruding moving body).

Further, for example, in a case where it is determined that the motion of the intruding moving body is an attacking action, there is a high possibility that the police officer 113 is attacked, as compared with a case where the motion of the intruding moving body is not an attacking action. Therefore, in a case where it is determined that the motion of the intruding moving body is an attacking action, the monitoring unit 144 sets the degree of danger (degree of importance) of the event higher than that in other cases. As described above, the monitoring unit 144 may evaluate the degree of importance of the event depending on whether or not the motion of the intruding moving body is an attacking action. Note that an action (behavior) of the intruding moving body used for the evaluation of the degree of importance of the event is arbitrary and is not limited to the example described above (attacking action). That is, the monitoring unit 144 may evaluate the degree of importance of the event on the basis of information regarding the behavior of the intruding moving body.

Further, for example, in a case where it is determined that the intruding moving body is a person registered in the registration information in which dangerous people are registered, there is a high possibility that the police officer 113 is attacked by the person, and there is a higher possibility that the police officer 113 becomes dangerous, as compared with a case where the intruding moving body is not a person registered in the registration information. For example, in a case where the intruding moving body is a person registered in a criminal database in which people having a criminal record are registered, there is a higher possibility that the police officer 113 becomes dangerous. Therefore, in a case where it is determined that the intruding moving body is a person registered in the registration information, the monitoring unit 144 sets the degree of danger (degree of importance) of the event higher than that in other cases. As described above, the monitoring unit 144 may evaluate the degree of importance of the event depending on whether or not the intruding moving body is a person registered in the registration information in which dangerous people are registered. Note that the registration information used for the evaluation of the degree of importance of the event is arbitrary and is not limited to the example described above (criminal database). That is, the monitoring unit 144 may evaluate the degree of importance of the event on the basis of arbitrary registration information (known evaluation regarding the moving body).

Note that the monitoring unit 144 may evaluate the degree of importance of the event on the basis of a plurality of pieces of information regarding the intruding moving body in the above examples. That is, the information regarding the intruding moving body may include at least one of the speed at which the intruding moving body approaches the target moving body, the component of the intruding moving body, the motion of the intruding moving body, or the known evaluation regarding the intruding moving body.

Further, the handling processing unit 145 may perform processing corresponding to the event detected by the monitoring unit 144 and the evaluation result of the event performed by the monitoring unit 144. For example, the handling processing unit 145 may make notification so as to express not only the occurrence of the event but also the degree of importance (degree of urgency or degree of danger) thereof. For example, in a case where the notification is made by an image, the degree of importance of the event may be indicated by a message, a picture pattern, or the like. Further, for example, in a case where the notification is made by light emission, the degree of importance of the event may be indicated by color, a light amount, a light emitting pattern, or the like of the light emission. Further, for example, in a case where the notification is made by a sound, the degree of importance of the event may be indicated by a message, melody, tone, volume, or the like. Further, for example, in a case where the notification is made by vibration, the degree of importance of the event may be indicated by a frequency, amplitude, vibration pattern, or the like of the vibration.

Note that the processing corresponding to the event, which is performed by the handling processing unit 145, is arbitrary and is not limited to the notification described above. For example, in a case where intrusion of an intruding moving body into the safe zone 211 is detected as an event, the handling processing unit 145 may control the flying object 103 via the flying object control unit 146 to track the intruding moving body and detect sensor information regarding the intruding moving body. Further, the handling processing unit 145 may control the flying object 103 via the flying object control unit 146 to observe (intensively monitor) a region in the vicinity of a place where the event has occurred. For example, the handling processing unit 145 may control the flying unit 171 to bring the flying object 103 closer to the place where the event has occurred or may control the sensor unit 172 to pan, tilt, or zoom up the image sensor. This makes it possible for the monitoring unit 144 to more accurately detect the event that has occurred. Therefore, the handling processing unit 145 can perform more appropriate processing.

### <Flow of Monitoring Processing>

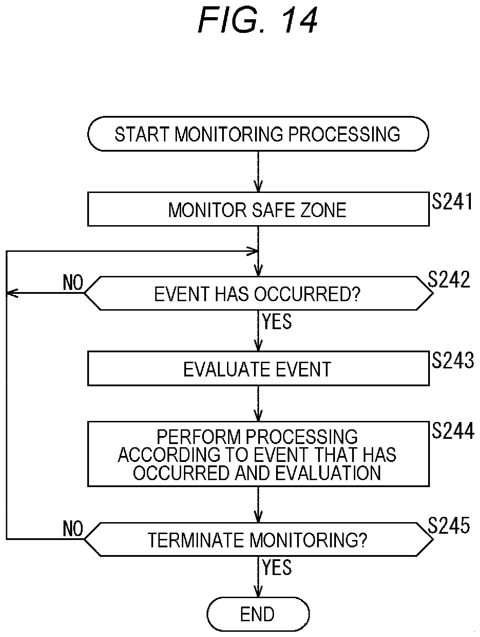

In order to monitor the safe zone as described above, the monitoring unit 144 and the handling processing unit 145 execute monitoring processing as the process in step S104 of Fig. 6. An example of a flow of the monitoring processing will be described with reference to a flowchart of Fig. 14.

When the monitoring processing is started, as described above, the monitoring unit 144 monitors the safe zone 211 in step S241.

In step S242, the monitoring unit 144 determines whether or not an event has occurred and waits until it is determined that an event has occurred. In a case where it is determined that an event has occurred, the monitoring unit 144 advances the processing to step S243.

In step S243, the monitoring unit 144 evaluates the event detected in step S242.

In step S244, the handling processing unit 145 performs processing according to the event detected in step S242 or an evaluation result of the event derived in step S243.

In step S245, the monitoring unit 144 determines whether or not to terminate the monitoring of the safe zone 211. In a case where it is determined not to terminate the monitoring, the processing returns to step S242, and the processing of step S242 and subsequent steps is repeated. In a case where it is determined in step S245 to terminate the monitoring, the monitoring processing terminates.

By executing the monitoring processing as described above, the monitoring unit 144 can more easily monitor the safe zone 211. Further, the handling processing unit 145 can perform the processing corresponding to the event detected in the safe zone 211.

Each processing unit of the patrol support system 100 performs each processing as described above, and therefore the handling processing unit 145 can provide more useful information for the police officer 113. That is, the patrol support system 100 can provide more useful support for an activity of the target moving body.

Further, the patrol support system 100 described above can monitor the safe zone 211 by using the flying object 103, the terminal device 104, and the like. That is, the safe zone 211 can be monitored in an unmanned manner. Therefore, the patrol support system 100 can restrain a decrease in efficiency of support for an activity. More typically, the patrol support system can improve the efficiency of support for an activity. This makes it possible to restrain an increase in cost. More typically, it is possible to reduce costs. Further, it is possible to restrain an increase in danger in monitoring of the safe zone 211. More typically, it is possible to improve safety in monitoring of the safe zone 211.

Further, because the patrol support system 100 monitors the safe zone 211 and performs processing corresponding to an event (support for an activity) and can therefore restrain danger of patrol carried out by the police officer 113. In other words, the support for the activity makes it possible for the police officer 113 to patrol more safely.

### <2. Vehicle Monitoring Mode>

### <2-1. Processing in Vehicle Monitoring Mode>

For example, in a case where it becomes difficult for the flying object 103 to track the police officer 113 (i.e., to monitor the safe zone 211 set around the police officer 113), the patrol support system 100 may stop tracking the police officer 113 and transition to a vehicle monitoring mode in which the safe zone 211 is set around the patrol car 101.

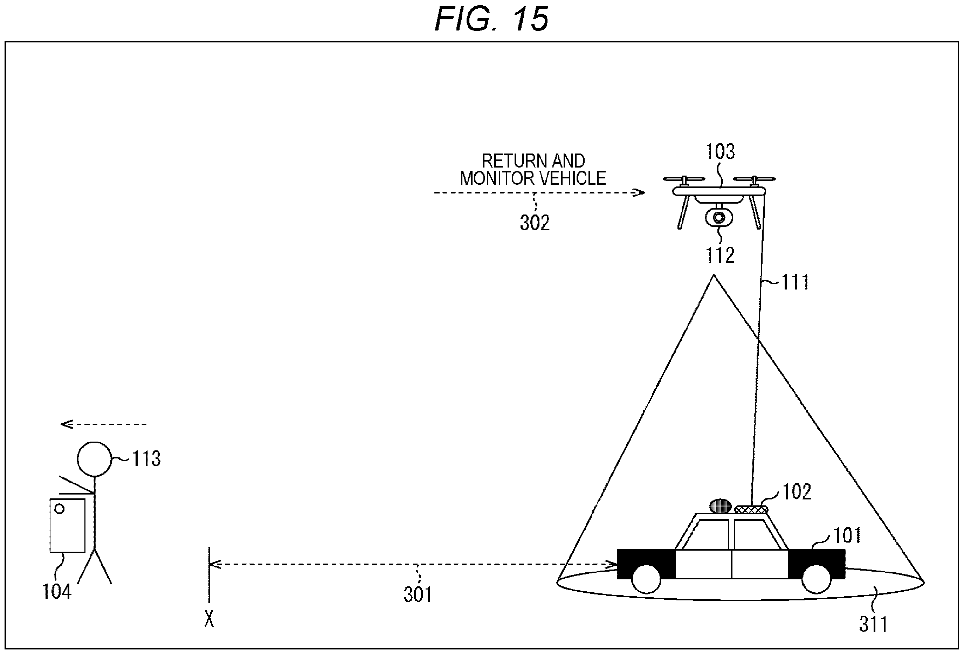

For example, as indicated by a double-headed arrow 301 in Fig. 15, when the police officer 113 goes away from the patrol car 101 by a predetermined distance X corresponding to the length of the cable 111 or a distance more than the predetermined distance X, the flying object 103 connected to the base station 102 by the cable 111 cannot track the police officer 113 anymore. Further, in some cases, the flying object 103 cannot track the police officer 113 because the police officer 113 moves into a building, for example.

In a case where it is difficult to track the police officer 113 as described above, the patrol support system 100 transitions to the vehicle monitoring mode and changes a support (protection) target from the police officer to the patrol car 101. In the vehicle monitoring mode, the target person tracking unit 142 returns the flying object 103 to the sky above the patrol car 101 associated with the flying object 103 (the patrol car 101 on which the base station 102 connected to the flying object 103 by the cable 111 is installed), as indicated by a dotted arrow 302 in Fig. 15. Then, the target person tracking unit 142 sets the patrol car 101 as a tracking (protection) target. The zone setting unit 143 sets a region in a predetermined range including the patrol car 101 as a safe zone 311.

In the vehicle monitoring mode, the monitoring unit 144 detects an attack, stealing, or the like with respect to the patrol car 101 as an event. The handling processing unit 145 can notify the police officer 113 or another person of occurrence of the event as processing for the event. For example, the handling processing unit 145 may make notification of the occurrence of the event by using the terminal device 104. Further, for example, the handling processing unit 145 may supply information to the central control server 105 to notify a user of the central control server 105 of the occurrence of the event.

Further, as the processing for the event, the handling processing unit 145 can perform warning, collection of information, intimidation, an attack, or the like with respect to a suspicious person who performs the attack, stealing, or the like. For example, the handling processing unit 145 may use the output unit 173 of the flying object 103 or the equipment of the patrol car 101 to warn or intimidate the suspicious person by using an image or sound. Further, for example, the handling processing unit 145 may perform collection of information regarding the suspicious person (e.g., capturing of an image of the suspicious person, or the like) by using the sensor unit 172 of the flying object 103. Further, for example, the handling processing unit 145 may attack the suspicious person by using the flying object 103.

Processes in processing of tracking the patrol car 101, processing of setting the safe zone 311, processing of monitoring the safe zone 311, and handling processing are similar to those in the first embodiment, except for the processes described above. Therefore, description thereof is omitted.

This makes it possible for the patrol support system 100 to also protect the vehicle (patrol car 101). Therefore, the patrol support system 100 can provide more useful support for an activity of the target moving body.

### <2-2. Flow of Vehicle Monitoring Processing>

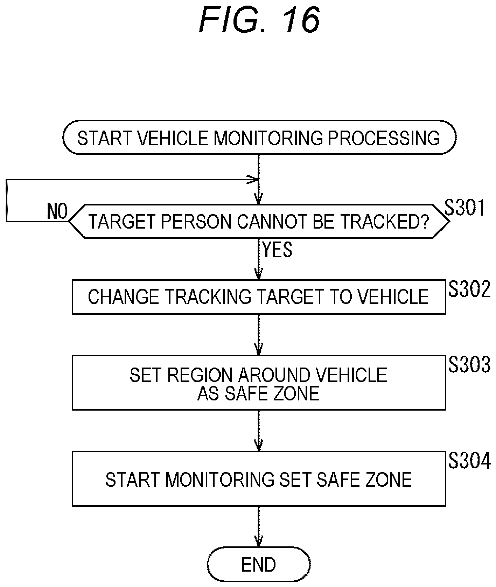

In order to realize the vehicle monitoring mode as described above, the information processing unit 131 executes the vehicle monitoring processing as the process in step S104 of Fig. 6. An example of a flow of the vehicle monitoring processing will be described with reference to a flowchart of Fig. 16.

When the vehicle monitoring processing is started, in step S301, the target person tracking unit 142 determines whether or not the police officer 113 (target person) cannot be tracked and waits until it is determined that the police officer cannot be tracked. In a case where it is determined in step S301 that the police officer 113 cannot be tracked, the processing proceeds to step S302.

In step S302, the target person tracking unit 142 changes the tracking target to a vehicle (patrol car 101) .

In step S303, the zone setting unit 143 sets a region around the patrol car 101 as the safe zone 311.

In step S304, the monitoring unit 144 starts monitoring the safe zone 311.

When the process in step S304 terminates, the vehicle monitoring processing terminates.

By executing the vehicle monitoring processing as described above, the information processing unit 131 can more easily realize the vehicle monitoring mode.

### <3. Designated Object Monitoring Mode>

### <3-1. Processing in Designated Object Monitoring Mode>

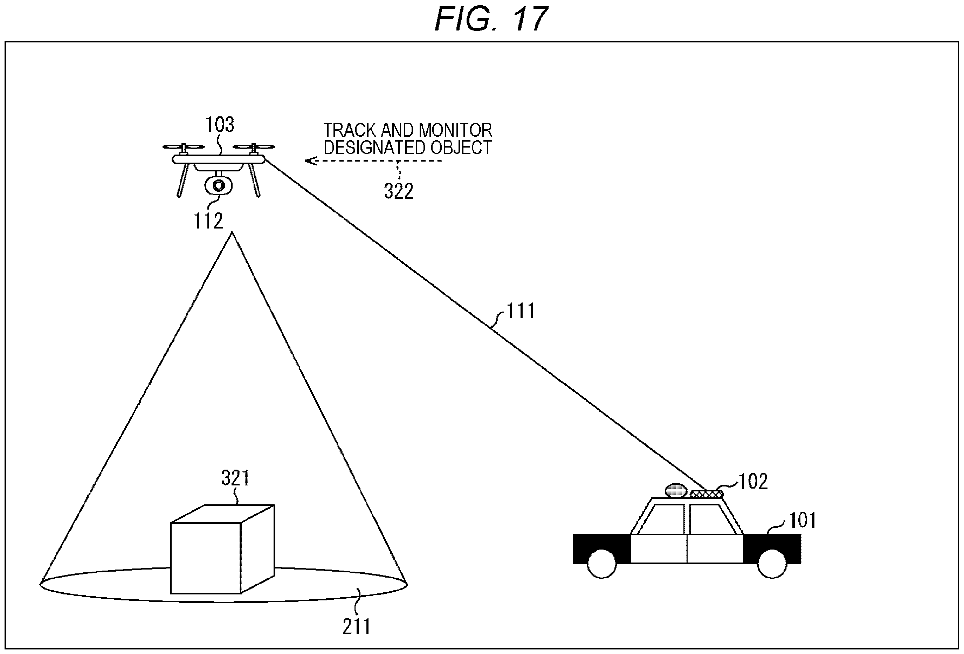

For example, as illustrated in Fig. 17, in a case where any object 321 other than the police officer 113 is designated as a monitoring, protection, or another target, the patrol support system 100 may transition to a designated object monitoring mode in which the safe zone 211 is set around the designated target.

In the designated object monitoring mode, the target person tracking unit 142 moves the flying object 103 to the sky above the designated object 321 as indicated by a dotted arrow 322 in Fig. 17. Then, the target person tracking unit 142 sets the object 321 as the tracking (protection) target. The zone setting unit 143 sets a region in a predetermined range including the object 321 as the safe zone 311.

The target is designated by an arbitrary user or arbitrary device (processing unit). For example, the police officer 113 may designate the target. For example, in a case where the police officer 113 arrests a criminal during patrol and further tracks another criminal, the police officer 113 designates the arrested criminal as the monitoring target in order to prevent the arrested criminal from running away, and then the patrol support system 100 transitions to the designated object monitoring mode.

When the patrol support system transitions to the designated object monitoring mode, the target person tracking unit 142 moves the flying object 103 near the target (arrested criminal) as described above and sets the arrested criminal as the tracking target. The zone setting unit 143 sets a predetermined region including the arrested criminal as the safe zone 311. The monitoring unit 144 monitors the safe zone 311, and detects, for example, running away of the arrested criminal, an act of attempting to run away, or the like as an event. As a matter of course, content of the event is arbitrary and is not limited to this example.

As processing corresponding to the detected event, for example, the handling processing unit 145 notifies the police officer 113 of a fact that the criminal has run away or attempts to run away or other facts by using the terminal device 104. Note that the processing corresponding to the event is arbitrary and is not limited to this example (notification to the police officer 113). For example, the notification may be given to a police officer other than the police officer 113 by using the flying object 103, the patrol car 101, or the like. Further, for example, the notification may be given to the user (e.g., an administrator or the like) of the central control server 105 by using the central control server 105. Further, the processing corresponding to the event may be other than notification. For example, the flying object 103 may be used to warn or obstruct a running criminal.

Further, for example, in a case where the police officer 113 seizes evidence during patrol, leaves the evidence, and further tracks a criminal, the police officer 113 designates the seized evidence as the protection target in order not to lose the seized evidence, and then the patrol support system 100 transitions to the designated object monitoring mode.

When the patrol support system transitions to the designated object monitoring mode, the target person tracking unit 142 moves the flying object 103 near the target (evidence) as in the above case and sets the evidence as the tracking target. The zone setting unit 143 sets a predetermined region including the evidence as the safe zone 311. The monitoring unit 144 monitors the safe zone 311 and detects, for example, stealing of the evidence, an act of attempting to steal the evidence, or the like as an event. As a matter of course, content of the event is arbitrary and is not limited to this example.

As the processing corresponding to the detected event, for example, the handling processing unit 145 notifies the police officer 113 of a fact that the evidence has been stolen or the evidence is about to be stolen or other facts by using the terminal device 104. Note that the processing corresponding to the event is arbitrary and is not limited to this example (notification to the police officer 113). For example, the notification may be given to a police officer other than the police officer 113 by using the flying object 103, the patrol car 101, or the like. Further, for example, the notification may be given to the user (e.g., an administrator or the like) of the central control server 105 by using the central control server 105. Further, the processing corresponding to the event may be other than notification. For example, the flying object 103 may be used to warn a person who steals the evidence or obstruct the stealing.

This makes it possible for the patrol support system 100 to also protect and monitor the designated target. Therefore, the patrol support system 100 can provide more useful support for an activity of the target moving body.

### <3-2. Flow of Designated Object Monitoring Processing>

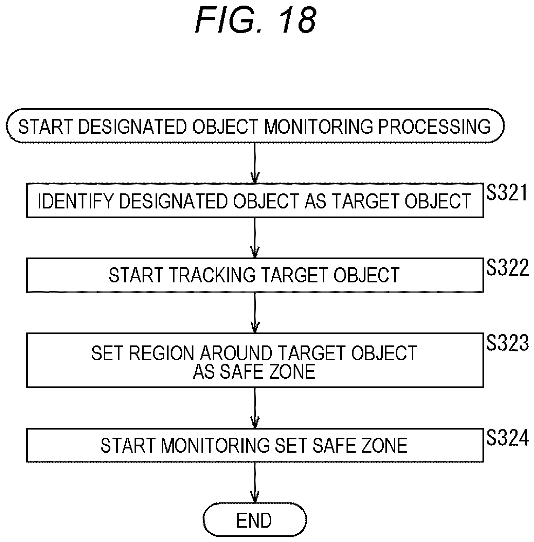

In order to realize the designated object monitoring mode as described above, the information processing unit 131 executes the designated object monitoring processing as the process in step S104 of Fig. 6. An example of a flow of the designated object monitoring processing will be described with reference to a flowchart of Fig. 18.

When the designated object monitoring processing is started, the target person tracking unit 142 identifies a designated object as a target object in step S321. Then, in step S322, the target person tracking unit 142 starts tracking the target object.

In step S323, the zone setting unit 143 sets a region around the target object as the safe zone 311.

In step S324, the monitoring unit 144 starts monitoring the safe zone 311.

When the processing in step S324 terminates, the designated object monitoring processing terminates.

By executing the designated object monitoring processing as described above, the information processing unit 131 can more easily realize the designated object monitoring mode.

### <4. Appendix>

### <Application Examples>

Note that the above description shows that a region to be monitored is set on the basis of, for example, information detected by the flying object 103. However, the information for setting the region to be monitored is not only detected by the flying object but may also be detected by, for example, an arbitrary moving object such as a device moved by a driver riding in the device, such as an automobile, ship, aircraft, train, or steam train, a device moved by remote operation, or an autonomously moving device. That is, the arbitrary moving object may include a sensor unit, and a region to be monitored may be set on the basis of information detected by the sensor unit. Note that sensors included in the sensor unit (i.e., content of the information detected by the sensor unit) are arbitrary as in the above case of the flying object 103.

Further, the above description shows that a police officer is used as an example of a support target (management target, tracking target, protection target), but the support target is arbitrary and is not limited to the police officer described above. For example, an arbitrary person who performs some activity (work) may be set as the support target (target person), such as a paramedic/emergency medical technician, firefighter, factory worker, mineworker, agricultural worker, elderly person, or child. Further, the support target is not limited to a person and may be an arbitrary animal (target animal).

Further, the support target is not limited to an animal and may be, for example, an arbitrary moving body (target moving body), such as a robot, which performs an activity on the basis of information detected by a sensor unit (e.g., a captured image of a surrounding area of a camera captured by the camera). In this case, a region to be monitored is set so as to include a region serving as a blind spot of a sensor of the target moving body, i.e., a region where information is not detectable by the sensor (e.g., a region outside an angle of view of the camera or a region hidden by an obstacle or the like (a region invisible from a position of the camera due to the obstacle or the like)).

Further, the safe zone 311 may be set and monitored by using a plurality of flying objects 103.

### <Computer>

The series of processing described above can be executed by hardware or can be executed by software. In a case where the series of processing is executed by software, a program forming the software is installed in a computer. Herein, examples of the computer includes a computer built in dedicated hardware and a general-purpose personal computer that can execute various functions by installing various programs.

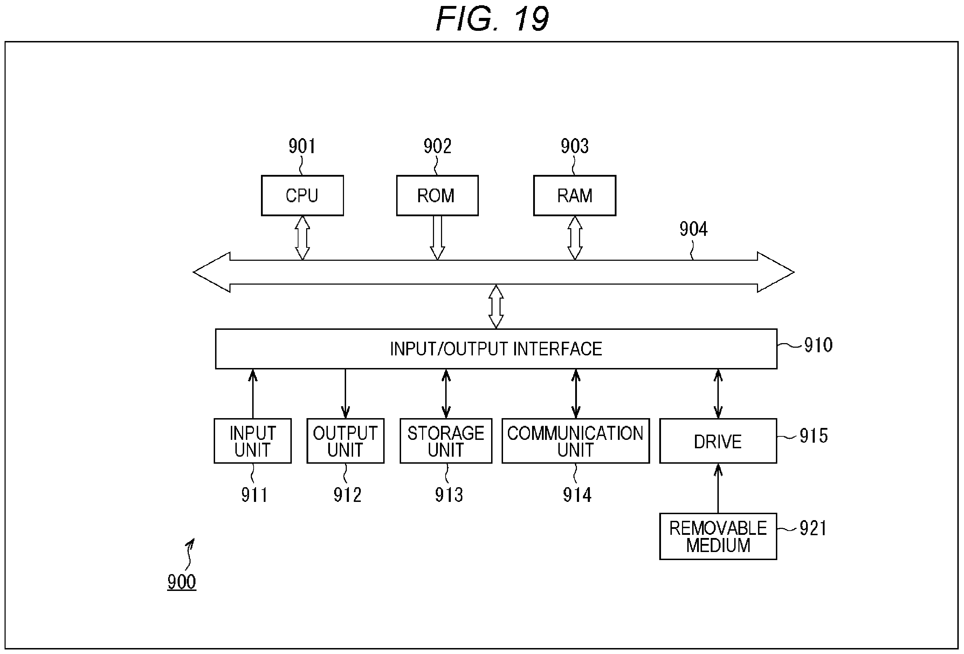

Fig. 19 is a block diagram illustrating a configuration example of hardware of a computer that executes the series of processing described above by a program.

In a computer 900 of Fig. 19, a central processing unit (CPU) 901, a read only memory (ROM) 902, and a random access memory (RAM) 903 are connected to each other via a bus 904.

An input/output interface 910 is also connected to the bus 904. The input/output interface 910 is connected to an input unit 911, an output unit 912, a storage unit 913, a communication unit 914, and a drive 915.

The input unit 911 includes, for example, a keyboard, a mouse, a microphone, a touchscreen, an input terminal, and the like. The output unit 912 includes, for example, a display, a speaker, an output terminal, and the like. The storage unit 913 includes, for example, a hard disk, a RAM disk, a nonvolatile memory, and the like. The communication unit 914 includes, for example, a network interface and the like. The drive 915 drives a removable medium 921 such as a magnetic disk, an optical disk, a magneto-optical disk, or a semiconductor memory.

In the computer configured as described above, the series of processing described above is performed by, for example, the CPU 901 loading a program stored in the storage unit 913 into the RAM 903 via the input/output interface 910 and the bus 904 and executing the program. The RAM 903 also stores data and the like necessary for the CPU 901 to execute various kinds of processing as appropriate.

The program executed by the computer can be applied by, for example, being recorded on the removable medium 921 as a package medium or the like. In that case, the program can be installed in the storage unit 913 via the input/output interface 910 by attaching the removable medium 921 to the drive 915.

Further, the program can also be provided via a wired or wireless transmission medium such as a local area network, the Internet, or digital satellite broadcasting. In that case, the program can be received by the communication unit 914 and be installed in the storage unit 913.

In addition, the program can also be installed in the ROM 902 or storage unit 913 in advance.

### <Target to Which Present Technology Is Applied>

Further, the present technology is applicable to an arbitrary configuration. For example, the present technology can also be implemented as a partial configuration of a device, such as a processor (e.g., a video processor) serving as a system large scale integration (LSI) or the like, a module (e.g., a video module) including a plurality of processors and the like, a unit (e.g., a video unit) including a plurality of modules and the like, or a set (e.g., a video set) obtained by further adding other functions to the unit.

Further, for example, the present technology is also applicable to a network system including a plurality of devices. For example, the present technology may be implemented as cloud computing in which processing is shared and jointly performed by a plurality of devices via a network. For example, the present technology may be implemented in a cloud service that provides a service regarding an image (moving image) to an arbitrary terminal such as a computer, an audio visual (AV) device, a portable information processing terminal, or an Internet of Things (IoT) device.

Note that, in this specification, a system means a set of a plurality of components (devices, modules (parts), and the like), and it does not matter whether or not all the components are included in the same housing. Therefore, a plurality of devices included in separate housings and connected via a network and a single device including a plurality of modules in a single housing are both systems.

### <Field and Application to Which Present Technology Is Applicable>

A system, device, processing unit, and the like to which the present technology is applied can be used in an arbitrary field such as, for example, traffic, medical care, crime prevention, agriculture, animal husbandry, mining, beauty, factories, home appliances, weather, or natural surveillance. Further, application thereof is also arbitrary.

### <Others>

The embodiments of the present technology are not limited to the above embodiments and can be variously modified without departing from the gist of the present technology.

For example, a configuration described as a single device (or processing unit) may be divided and configured as a plurality of devices (or processing units). On the contrary, in the above description, a configuration described as a plurality of devices (or processing units) may be integrally configured as a single device (or processing unit). Further, as a matter of course, a configuration other than the configurations described above may be added to the configuration of each device (or each processing unit). Furthermore, a part of a configuration of a certain device (or processing unit) may be included in a configuration of another device (or another processing unit) as long as a configuration or operation of the entire system is substantially the same.

Further, for example, the program described above may be executed by an arbitrary device. In that case, the device only needs to have a necessary function (e.g., a functional block) to obtain necessary information.

Further, for example, each step of a single flowchart may be executed by a single device or may be shared and executed by a plurality of devices. Furthermore, in a case where a single step includes a plurality of processes, the plurality of processes may be executed by a single device or may be shared and executed by a plurality of devices. In other words, the plurality of processes included in the single step can also be executed as processes in a plurality of steps. On the contrary, the processes described as the plurality of steps can also be integrally executed as a single step.

Further, for example, in the program executed by the computer, processes in steps describing the program may be executed in time series in the order described in this specification or may be executed in parallel or individually at a necessary timing such as when a call is made. That is, the processes in the respective steps may be executed in order different from the order described above as long as there is no contradiction. Further, the processes in the steps describing the program may be executed in parallel with processes of another program or may be executed in combination with processes of another program.

Further, for example, a plurality of technologies regarding the present technology can each be implemented alone independently as long as there is no contradiction. As a matter of course, a plurality of arbitrary present technologies can also be implemented in combination. For example, a part of or the entire present technology described in any embodiment can be implemented in combination with a part of or the entire present technology described in another embodiment. Further, a part of or the entire arbitrary present technology described above can also be implemented in combination with another technology not described above.

Note that the present technology can also have the following configurations.
(1) An information processing device including
   a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.
(2) The information processing device according to (1), in which
   the setting unit sets a region around the target moving body in a predetermined direction as the region to be monitored.
(3) The information processing device according to (1), in which
   the setting unit sets a region behind the target moving body as the region to be monitored.
(4) The information processing device according to (1), further including:
   an event detection unit that detects a predetermined event in the region to be monitored; and
   a handling processing unit that performs processing corresponding to the event detected by the event detection unit.
(5) The information processing device according to (4), in which
   the event detection unit detects, as the event, detection of an intruding moving body that has intruded into the region to be monitored.
(6) The information processing device according to (4), in which
   the handling processing unit performs processing regarding notification of occurrence of the event to the target moving body.
(7) The information processing device according to (6), in which
   the handling processing unit causes one of or both the moving object and a terminal device carried by the target moving body to make the notification.
(8) The information processing device according to (4), in which
   the event detection unit evaluates the detected event, and
   the handling processing unit performs processing corresponding to the event detected by the event detection unit and an evaluation result of the event.
(9) The information processing device according to (8), in which
   the event detection unit detects, as the event, detection of an intruding moving body that has intruded into the region to be monitored and evaluates a degree of importance of the detected event on the basis of information regarding the intruding moving body.
(10) The information processing device according to (9), in which
   the information regarding the intruding moving body includes at least one of a speed at which the intruding moving body approaches the target moving body, a component of the intruding moving body, motion of the intruding moving body, or known evaluation regarding the intruding moving body.
(11) The information processing device according to (1), in which
   the target-moving-body-related information includes at least one of an image, sound, temperature distribution, or distance in a surrounding area of the target moving body including the target moving body.
(12) The information processing device according to (1), in which
   the setting unit sets the region to be monitored on the basis of the target-moving-body-related information and terminal detection information detected by a terminal device carried by the target moving body.
(13) The information processing device according to (12), in which
   the terminal detection information includes at least one of an image or sound in a field-of-view direction of the target moving body, an image or voice of the target moving body, biological information of the target moving body, or information regarding a position, direction, or posture of the target moving body.
(14) The information processing device according to (1), further including
   a tracking processing unit that identifies the target moving body and causes the moving object to track the identified target moving body.
(15) The information processing device according to (14), in which
   the tracking processing unit identifies the target moving body on the basis of position information of a terminal device carried by the target moving body and an image of a surrounding area of the target moving body including the target moving body and causes the moving object to track the identified target moving body.
(16) The information processing device according to (14), in which
   in a case where tracking of the target moving body becomes impossible, the tracking processing unit moves the moving object near a vehicle associated with the moving object, and
   the setting unit sets a region in a predetermined range including the vehicle as the region to be monitored.
(17) The information processing device according to (14), in which
   in a case where a protection target is designated, the tracking processing unit moves the moving object near the protection target, and
   the setting unit sets a region in a predetermined range including the protection target as the region to be monitored.
(18) The information processing device according to (1), further including
   a communication unit that communicates with another device to acquire information detected by the moving object.
(19) An information processing method including
   setting, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.
(20) A program for causing a computer to function as
   a setting unit that sets, as a region to be monitored, a predetermined region at a predetermined relative position with respect to a target moving body, the predetermined region being a region where predetermined information is detectable by a moving object, on the basis of target-moving-body-related information regarding the target moving body detected by the moving object.

### REFERENCE SIGNS LIST

- 100: Patrol support system
- 101: Patrol car
- 102: Base station
- 103: Flying object
- 104: Terminal device
- 105: Central control server
- 111: Cable
- 112: Camera
- 113: Police officer
- 114: Network
- 131: Information processing unit
- 132: Communication unit
- 141: Information acquisition unit
- 142: Target person tracking unit
- 143: Zone setting unit
- 144: Monitoring unit
- 145: Handling processing unit
- 146: Flying object control unit
- 147: Terminal control unit
- 148: Server processing unit
- 149: Vehicle control unit
- 151: Flight control unit
- 152: Sensor control unit
- 153: Output control unit
- 161: Sensor control unit
- 162: Output control unit
- 171: Flying unit
- 172: Sensor unit
- 173: Output unit
- 174: Communication unit
- 181: Sensor unit
- 182: Output unit
- 183: Communication unit
- 191: Instruction command generation unit
- 192: Streaming processing unit
- 193: Communication unit

## Claims

1. An information processing device comprising
a setting unit that sets, as a region to be monitored, a predetermined region at a predetermined relative position with respect to a target moving body, the predetermined region being a region where predetermined information is detectable by a moving object, on a basis of target-moving-body-related information regarding the target moving body detected by the moving object.

2. The information processing device according to claim 1, wherein
the setting unit sets a region around the target moving body in a predetermined direction as the region to be monitored.

3. The information processing device according to claim 1, wherein
the setting unit sets a region behind the target moving body as the region to be monitored.

4. The information processing device according to claim 1, further comprising:
an event detection unit that detects a predetermined event in the region to be monitored; and
a handling processing unit that performs processing corresponding to the event detected by the event detection unit.

5. The information processing device according to claim 4, wherein
the event detection unit detects, as the event, detection of an intruding moving body that has intruded into the region to be monitored.

6. The information processing device according to claim 4, wherein
the handling processing unit performs processing regarding notification of occurrence of the event to the target moving body.

7. The information processing device according to claim 6, wherein
the handling processing unit causes one of or both the moving object and a terminal device carried by the target moving body to make the notification.

8. The information processing device according to claim 4, wherein
the event detection unit evaluates the detected event, and
the handling processing unit performs processing corresponding to the event detected by the event detection unit and an evaluation result of the event.

9. The information processing device according to claim 8, wherein
the event detection unit detects, as the event, detection of an intruding moving body that has intruded into the region to be monitored and evaluates a degree of importance of the detected event on a basis of information regarding the intruding moving body.

10. The information processing device according to claim 9, wherein
the information regarding the intruding moving body includes at least one of a speed at which the intruding moving body approaches the target moving body, a component of the intruding moving body, motion of the intruding moving body, or known evaluation regarding the intruding moving body.

11. The information processing device according to claim 1, wherein
the target-moving-body-related information includes at least one of an image, sound, temperature distribution, or distance in a surrounding area of the target moving body including the target moving body.

12. The information processing device according to claim 1, wherein
the setting unit sets the region to be monitored on a basis of the target-moving-body-related information and terminal detection information detected by a terminal device carried by the target moving body.

13. The information processing device according to claim 12, wherein
the terminal detection information includes at least one of an image or sound in a field-of-view direction of the target moving body, an image or voice of the target moving body, biological information of the target moving body, or information regarding a position, direction, or posture of the target moving body.

14. The information processing device according to claim 1, further comprising
a tracking processing unit that identifies the target moving body and causes the moving object to track the identified target moving body.

15. The information processing device according to claim 14, wherein
the tracking processing unit identifies the target moving body on a basis of position information of a terminal device carried by the target moving body and an image of a surrounding area of the target moving body including the target moving body and causes the moving object to track the identified target moving body.

16. The information processing device according to claim 14, wherein
in a case where tracking of the target moving body becomes impossible, the tracking processing unit moves the moving object near a vehicle associated with the moving object, and
the setting unit sets a region in a predetermined range including the vehicle as the region to be monitored.

17. The information processing device according to claim 14, wherein
in a case where a protection target is designated, the tracking processing unit moves the moving object near the protection target, and
the setting unit sets a region in a predetermined range including the protection target as the region to be monitored.

18. The information processing device according to claim 1, further comprising
a communication unit that communicates with another device to acquire information detected by the moving object.

19. An information processing method comprising
setting, as a region to be monitored, a predetermined region at a predetermined relative position with respect to a target moving body, the predetermined region being a region where predetermined information is detectable by a moving object, on a basis of target-moving-body-related information regarding the target moving body detected by the moving object.

20. A program for causing a computer to function as
a setting unit that sets, as a region to be monitored, a predetermined region at a predetermined relative position with respect to a target moving body, the predetermined region being a region where predetermined information is detectable by a moving object, on a basis of target-moving-body-related information regarding the target moving body detected by the moving object.
